(19) **Europäisches Patentamt / European Patent Office / Office européen des brevets**

(11) **EP 4 641 989 A1**

(12) **EUROPEAN PATENT APPLICATION**
published in accordance with Art. 153(4) EPC

(43) Date of publication:
**29.10.2025 Bulletin 2025/44**

(21) Application number: **22968947.6**

(22) Date of filing: **22.12.2022**

(51) International Patent Classification (IPC):
***H04L 27/00*** (2006.01)

(52) Cooperative Patent Classification (CPC):
**H04L 27/00**

(86) International application number:
**PCT/CN2022/141078**

(87) International publication number:
**WO 2024/130651 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHANG, Shichang**
**Dongguan, Guangdong 523860 (CN)**
• **MA, Teng**
**Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **SIDELINK CONTROL INFORMATION SENDING METHOD AND APPARATUS, AND DEVICE AND MEDIUM**

(57) A sidelink control information (SCI) sending method and apparatus, and a device and a medium, which relate to the field of wireless communications. The method is applied to a terminal, and comprises: according to a network configuration or a pre-configuration, sending an SL PRS and SCI, wherein the SCI is used for indicating a resource reservation condition of the SL PRS (210). The method can reduce conflicts between SL PRS transmission resources and SL-U communication resources.

Transmitting an SL PRS and SCI based on network configuration or pre-configuration, wherein the SCI is used to indicate resource reservation for the SL PRS

210

FIG. 16

## Description

### TECHNICAL FIELD

Embodiments of the present disclosure relate to the field of wireless communications, and in particular, relate to a method and apparatus for transmitting sidelink control information (SCI), and a device and a medium thereof.

### RELATED ART

During transmission of a sidelink (SL) positioning reference signal (PRS) on unlicensed spectrum, in a case where an SL PRS resource pool for transmitting the SL PRS is the same as a sidelink-unlicensed (SL-U) communication resource pool for SL-U communication or the SL PRS resource pool is not completely the same as but overlapped with the SU-U communication resource pool, how to reduce collisions between SL PRS transmission resources and the SL-U communication resources is an urgent problem to be solved.

### SUMMARY

Embodiments of the present disclosure provide a method and apparatus for transmitting SCI, and a device and a medium thereof, which can reduce the collisions between the SL PRS transmission resource and the SL-U communication resource. The technical solutions are as follows.

According to an aspect of the present disclosure, a method for transmitting SCI is provided. The method is applicable to a terminal, and includes:

transmitting an SL PRS and SCI based on network configuration or pre-configuration, wherein the SCI is used to indicate resource reservation for the SL PRS.

According to an aspect of the present disclosure, an apparatus for transmitting SCI is provided. The apparatus is applicable to implementing a terminal, and includes:

a transmitting module, configured to transmit an SL PRS and SCI based on network configuration or pre-configuration, wherein the SCI is used to indicate resource reservation for the SL PRS.

According to an aspect of the present disclosure, a terminal is provided. The terminal includes: a processor and a transceiver communicably connected to the processor, wherein

the transceiver is configured to transmit an SL PRS and SCI based on network configuration or pre-configuration, wherein the SCI is used to indicate resource reservation for the SL PRS.

According to an aspect of the present disclosure, a terminal is provided. The terminal includes: a processor and a memory storing one or more instructions, one or more programs, a code set, and an instruction set, which when loaded and executed by the processor, cause the terminal to perform the method for transmitting SCI according to above aspect.

According to an aspect of the present disclosure, a computer-readable storage medium is provided. The computer-readable storage medium stores one or more executable instructions, which when loaded and executed by a processor, wherein the one or more computer programs, when loaded and run by a processor of a communication device, cause the communication device to perform the method for transmitting SCI according to above aspect.

According to an aspect of the present disclosure, a chip is provided. The chip includes programmable logic circuity or one or more program instructions, wherein the chip, when running on a communication device, causes the communication device to perform the method for transmitting SCI according to above aspect.

According to an aspect of the present disclosure, a computer program product is provided. The computer program product, when running on a processor of a communication device, causes the communication device to perform the method for transmitting SCI according to above aspect.

The technical solutions according to the embodiments of the present disclosure achieve the following beneficial effects.

As some terminals (a backward terminal) fail to identify SCI (or referred to as SCI for positioning (SCI-P)) used to indicate resource reservation for the SL PRS, in a case where the terminal transmits the SCI-P to reserve part of resources for the SL PRS, the backward terminal fails to know occupation of the part of resources and may still select a part of resources for SL-U communication, such that transmission collisions occurs between the SL-U communication and the SL PRS. The terminal transmitting the SL PRS determines resource reservation for the SL PRS based on network configuration or pre-configuration to avoid the transmission collisions between the SL-U communication and the SL PRS. The network configuration or pre-configuration is determined based on resource reservation in an SL PRS resource pool and resource reservation in an SL-U communication resource pool. In a case where resources in the SL PRS resource pool are overlapped with resources in the SL-U communication resource pool, the overlapped resources may not be reserved for the SL PRS; and in a case where resources in the SL PRS resource pool are not overlapped with resources in the SL-U communication resource pool, the non-overlapped resources may be reserved for the SL PRS, such that interference between SL PRS data and SL-U data is mitigated, and a positioning accuracy of an SL PRS system is improved.

## BRIEF DESCRIPTION OF THE DRAWINGS

For clearer descriptions of the technical solutions according to the embodiments of the present disclosure, the following briefly introduces the accompanying drawings required for describing the embodiments. Apparently, the accompanying drawings for the following description show merely some embodiments of the present disclosure, and persons of ordinary skill in the art may still derive other drawings from these accompanying drawings without creative efforts.

FIG. 1 is a schematic diagram of a communication system according to some embodiments of the present disclosure;
FIG. 2 is a schematic diagram of sidelink communication according to some embodiments of the present disclosure;
FIG. 3 is a schematic diagram of sidelink communication according to some embodiments of the present disclosure;
FIG. 4 is a schematic diagram of sidelink communication according to some embodiments of the present disclosure;
FIG. 5 is a schematic diagram of a method for transmitting SCI according to some embodiments of the present disclosure;
FIG. 6 is a schematic diagram of a method for transmitting SCI according to some embodiments of the present disclosure;
FIG. 7 is a schematic diagram of a method for transmitting SCI according to some embodiments of the present disclosure;
FIG. 8 is a schematic diagram of a method for transmitting SCI according to some embodiments of the present disclosure;
FIG. 9 is a schematic diagram of a method for transmitting SCI according to some embodiments of the present disclosure;
FIG. 10 is a schematic diagram of a method for transmitting SCI according to some embodiments of the present disclosure;
FIG. 11 is a schematic diagram of a method for transmitting SCI according to some embodiments of the present disclosure;
FIG. 12 is a schematic diagram of a method for transmitting SCI according to some embodiments of the present disclosure;
FIG. 13 is a schematic diagram of a method for transmitting SCI according to some embodiments of the present disclosure;
FIG. 14 is a schematic diagram of a method for transmitting SCI according to some embodiments of the present disclosure;
FIG. 15 is a schematic diagram of a method for transmitting SCI according to some embodiments of the present disclosure;
FIG. 16 is a flowchart of a method for transmitting SCI according to some embodiments of the present disclosure;
FIG. 17 is a schematic diagram of a method for transmitting SCI according to some embodiments of the present disclosure;
FIG. 18 is a schematic diagram of a method for transmitting SCI according to some embodiments of the present disclosure;
FIG. 19 is a schematic diagram of a method for transmitting SCI according to some embodiments of the present disclosure;
FIG. 20 is a schematic diagram of a method for transmitting SCI according to some embodiments of the present disclosure;
FIG. 21 is a flowchart of a method for transmitting SCI according to some embodiments of the present disclosure;
FIG. 22 is a flowchart of a method for transmitting SCI according to some embodiments of the present disclosure;
FIG. 23 is a schematic diagram of a method for transmitting SCI according to some embodiments of the present disclosure;
FIG. 24 is a flowchart of a method for transmitting SCI according to some embodiments of the present disclosure;
FIG. 25 is a flowchart of a method for transmitting SCI according to some embodiments of the present disclosure;
FIG. 26 is a schematic diagram of a method for transmitting SCI according to some embodiments of the present disclosure;
FIG. 27 is a schematic diagram of a method for transmitting SCI according to some embodiments of the present disclosure;
FIG. 28 is a schematic diagram of a method for transmitting SCI according to some embodiments of the present disclosure;

FIG. 29 is a schematic diagram of a method for transmitting SCI according to some embodiments of the present disclosure;

FIG. 30 is a flowchart of a method for transmitting SCI according to some embodiments of the present disclosure;

FIG. 31 is a schematic diagram of a method for transmitting SCI according to some embodiments of the present disclosure;

FIG. 32 is a schematic diagram of a method for transmitting SCI according to some embodiments of the present disclosure;

FIG. 33 is a schematic diagram of a method for transmitting SCI according to some embodiments of the present disclosure;

FIG. 34 is a structural block diagram of an apparatus for transmitting SCI according to some embodiments of the present disclosure; and

FIG. 35 is a schematic structural diagram of a communication device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios in the embodiments of the present disclosure are intended to describe the technical solutions according to the embodiments of the present disclosure more clearly, but do not constitute a limitation on the technical solutions according to the embodiments of the present disclosure. Those of ordinary skill in the art acknowledge that, with the evolution of the network architecture and the emergence of new service scenarios, the technical solutions according to the embodiments of the present disclosure are also applicable to similar technical problems.

It should be understood that the term "indication" in the embodiments of the present disclosure refers to direct or indirect indication, or an associated relationship. Illustratively, in a case where A indicates B, it means that: A directly indicates B, for example, B can be acquired through A; A indirectly indicates B, for example, A indicates C, and B can be acquired through C; or A and B have an association relationship.

In some embodiments of the present disclosure, the term "correspondence" means direct correspondence or indirect correspondence between the two objects, association between the two objects, or a relationship of indicating and being indicated, configuring and being configured, or the like.

In the embodiments of the present disclosure, the term "predefined" may be implemented by pre-storing corresponding codes, forms or other means indicating relevant information in a device (including, for example, a terminal and a network device), and the present disclosure does not limit the specific implementation. For example, predefinition may be defined in the protocol.

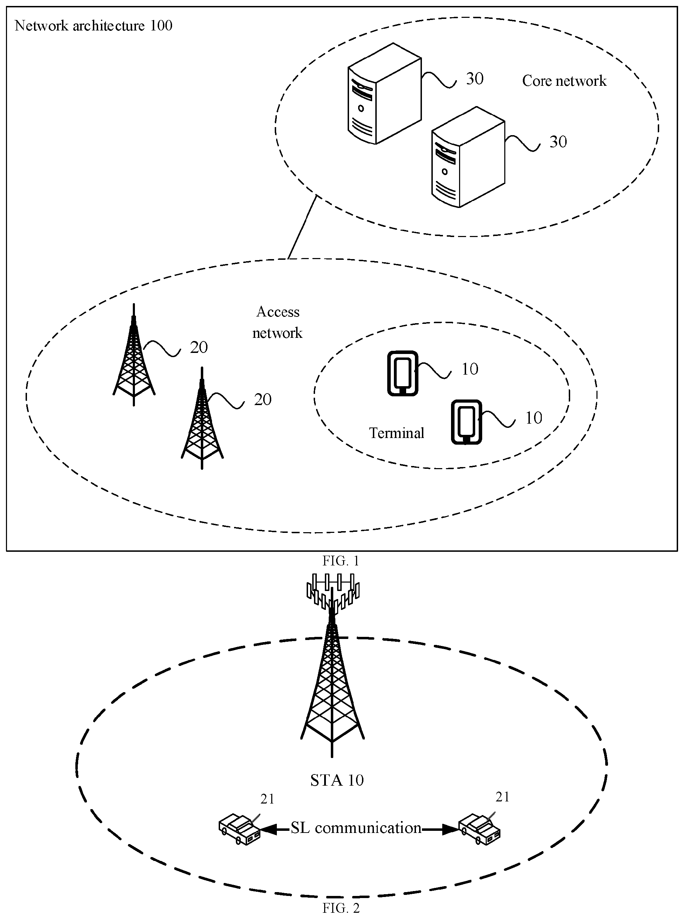

Referring to FIG. 1, FIG. 1 is a block diagram of a network architecture 100 according to some embodiments of the present disclosure. The network architecture 100 involves a terminal 10, an access network device 20, and a core network device 30.

The terminal 10 is a user equipment (UE), an access terminal, a subscriber unit, a subscriber station, a mobile station, a mobile console, a remote station, a remote terminal, a mobile device, a wireless communication device, a user agent, a user device, or the like. In some embodiments, the terminal 10 is a cellular phone, a cordless phone, a Session Initiation Protocol (SIP) phone, a wireless local loop (WLL) station, a personal digital assistant (PDA), a handheld device with a wireless communication function, a computing device or other processing devices connected to a radio modem, an in-vehicle device, a wearable device, a terminal in a $5^{th}$ generation system (5GS) or a terminal in a future public land mobile network (PLMN), which is not limited in the embodiments of the present disclosure. The devices described above are collectively referred to as terminals for convenient description. Generally, a plurality of terminal devices 10 are provided. One or more of the terminal devices 10 are disposed in a cell managed by each of the access network devices 20.

The access network device 20 is a device deployed in the access network and configured to provide a wireless communication function to the terminal 10. The access network device 20 includes various types of macro base stations, micro base stations, relay stations, access points, and the like. In systems using different radio access technologies, the devices having the functions of the access network device may have different names, for example, the gNodeBs, or gNBs in 5G new radio (NR) systems. With the evolution of communications technologies, the name "access network device" may vary. For convenient description, the above devices providing the wireless communication function for the terminal 10 are collectively referred to as the access network device in the embodiments of the present disclosure. In some embodiments, the terminal 10 communicates with the core network device 30 via the access network device 20. Illustratively, in a long-term evolution (LTE) system, the access network device 20 is an evolved universal terrestrial radio access network (EUTRAN) or one or more eNodeBs in the EUTRAN; and in a 5G NR system, the access network device 20 is a radio access network (RAN) or one or more gNBs in the RAN. In the embodiments of the present disclosure, the network device is the access network device 20, for example, a station, unless otherwise specified.

The core network device 30 is a device deployed in the core network, mainly functions for user connection, user management and service bearing, and acts as a bearer network for providing an interface to an external network. For example, the core network device in the 5G NR system includes an access and mobility management function (AMF) network element, an authentication server function (AUSF) network element, a user plane function (UPF) network element, a session management function (SMF) network element, a location management function (LMF) network element, a policy control function (PCF) network element, an unified data management (UDM) network element, and the like.

In some embodiments, the access network device 20 and the core network device 30 communicate with each other using the air interface technology, such as the NG interface in the 5G NR system. The access network device 20 and the terminal 10 communicate with each other using the air interface technology, such as a Uu interface.

The access network device is an access device that allows the terminal device to connect to a network architecture thereof in a wireless mode, and mainly functions for wireless resource management, quality of service (QoS) management, data compression, and encryption on the air interface side. For example, the access network device is a NodeB, an evolved eNodeB, a station in a 5G mobile communication system or an NR communication system, a station in a future mobile communication system, or the like.

The core network device includes a network slice selection function (NSSF), an AUSF, a UDM, an AMF, an SMF, a PCF, and a UPF.

The UE is connected to (R)AN at an access stratum over a Uu interface to exchange an access stratum message and transmit wireless data. The UE IS connected to the AMF at a non-access stratum (NAS) over an N1 interface to exchange a NAS message. The AMF is a mobility management function in the core network, the SMF is a session management function in the core network. In addition to mobility management for the UE, the AMF also functions to forward a session management message between the UE and the SMF. The PCF is a policy management function in the core network, and functions to formulate policies for UE mobility management, session management, and billing. The PCF achieves data transmission with an external application function (AF) over an N5 interface. The UPF is a user-side function in the core network, and achieves data transmission with an external data network (DN) over an N6 interface and with an over an N3 interface.

The "5G NR system" in the embodiments of the present disclosure is also referred to as a 5G system or an NR system, and those skilled in the art understand the meaning. The technical solutions according to the embodiments of the present disclosure are applicable to the LTE system, the 5G NR system, evolved systems of the 5G NR system, a narrow band Internet of things (NB-IoT), or other communication systems, which is not limited in the present disclosure.

Related description are given first.

The SL transmission technology is different from a traditional cellular system in which communication data is received or transmitted by the access network device, and SL transmission is direct communication data transmission between terminals over the sidelink. For the SL transmission, two transmission modes are defined in the 3rd Generation Partnership Project (3GPP): a mode A and a mode B. In the mode A, transmission resources of the SL UE are assigned by the access network device, and the SL UE transmits communication data in the SL based on the transmission resources assigned by the access network device. The access network device allocates transmission resources of one transmission process or transmission resources of semi-static transmission for the SL UE. In the mode B, the SL UE selects transmission resources from a resource pool for communication data transmission. Specifically, the SL UE selects the transmission resources from the resource pool by monitoring, or selects the transmission resources from the resource pool in a random selection mode. In a case where SL transmission is performed on unlicensed spectrum, the access network device pre-configures a plurality of resource pools (an SL PRS resource pool, an SL-U communication resource pool, and the like) for the UE. In executing specific services, the UE selects resources from the corresponding resource pool to perform a listen before talk (LBT) process. In a case where the LBT process is successful, the UE occupies the resources for sidelink transmission on the unlicensed spectrum. When transmitting sidelink data on the resources, the UE further transmits the SCI. The SCI indicates a resource occupied by the current sidelink transmission of the UE and a resource reserved by the UE. For example, in a case where the UE occupies resources from the SL PRS resource pool through the LBT to transmit SL PRS, the UE transmits the SL PRS and SCI-P on the resources. The SCI-P indicates the resource occupied by the SL PRS currently, and the resource reserved for later SL PRS.

The SL transmission is categorized into SL communication within the network coverage, SL communication partially within the network coverage, and SL communication outside the network coverage based on network coverage of the communicated terminal based on network coverage cases of the terminal achieving the communication, as shown in FIG. 2, FIG. 3, and FIG. 4.

In FIG. 2, in the SL communication within the network coverage, all terminals 21 in SL communication are within a coverage range of the same station 10, and the terminals 21 perform the SL communication based on the same SL configuration by receiving the configuration signaling from the station 10.

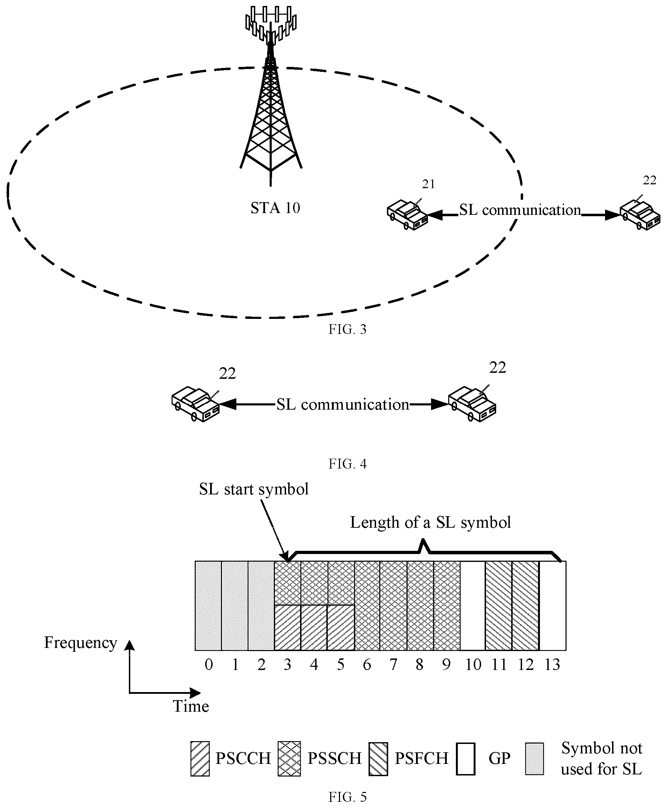

In FIG. 3, in the SL communication partially within the network coverage, part of terminals 21 in SL communication are within a coverage range of the station, and the part of terminals 21 perform the SL communication based on the configuration of the station 10 by receiving the configuration signaling from the station 10. A terminal 22 outside the network coverage range fails to receive the configuration signaling from the station 10. In this case, the terminal 22 outside the network coverage range determines the SL configuration and performs the SL communication based on pre-configuration information and information carried in a physical sidelink broadcast channel (PSBCH) transmitted by the terminal 21 within the network coverage range.

In FIG. 4, in the SL communication outside the network coverage, all terminals 22 in SL communication are outside the network coverage range, and all terminals 22 determine the SL configuration and perform the SL communication based on the pre-configuration information.

The vehicle-to-everything (V2X) is a key technology in future smart transportation systems, and is mainly aimed at researching vehicle data transmission schemes based on a 3GPP communication protocol. V2X communications include vehicle-to-vehicle (V2V) communications, vehicle-to-infrastructure (V2I) communications, vehicle-to-people (V2P) communications, and the like. V2X applications improve driving safety, reduce congestion and vehicle energy consumption, increase traffic efficiency, and the like.

**Slot structure in NR-V2X**

In NR-V2X, a physical sidelink shared channel (PSSCH) and an associated physical sidelink control channel (PSCCH) are transmitted in the same slot, and the PSCCH occupies two or three time-domain symbols. The time-domain resources in the NR-V2X are allocated using a slot as an allocation granularity. A start point and a length of time-domain symbols for sidelink transmission in a slot are configured based on parameters: a sidelink-sidelink start symbol (sl-startSLsymbols) and a sidelink-sidelink symbol length (sl-lengthSLsymbols). A last symbol in the symbols is used as a guard period (GP), and the PSSCH and the PSCCH only use other time-domain symbols. In a case where a transmission resource of a physical sidelink feedback channel (PSFCH) is configured with a slot, the PSSCH and the PSCCH fail to occupy the time-domain symbol for transmitting the PSFCH, and an automatic gain control (AGC) and a GP symbol before the symbol.

As shown in FIG. 5, according to network configuration, a sidelink start symbol (sl-StartSymbol) is 3 and a sidelink symbol length (sl-LengthSymbols) is 11, that is, 11 time-domain symbols starting from a symbol index 3 in a slot are used for sidelink transmission, a transmission resource for the PSFCH is included in the slot, and the PSFCH occupies symbol 11 and symbol 12. Symbol 11 is used as the AGC symbol for the PSFCH, symbol 10 and symbol 13 are used as GPs, and time-domain symbols that are used for the PSSCH transmission are symbol 3 to symbol 9. The PSCCH occupies three time-domain symbols, that is, symbol 3, symbol 4, and symbol 5, and symbol 3 are usually used as the AGC symbols.

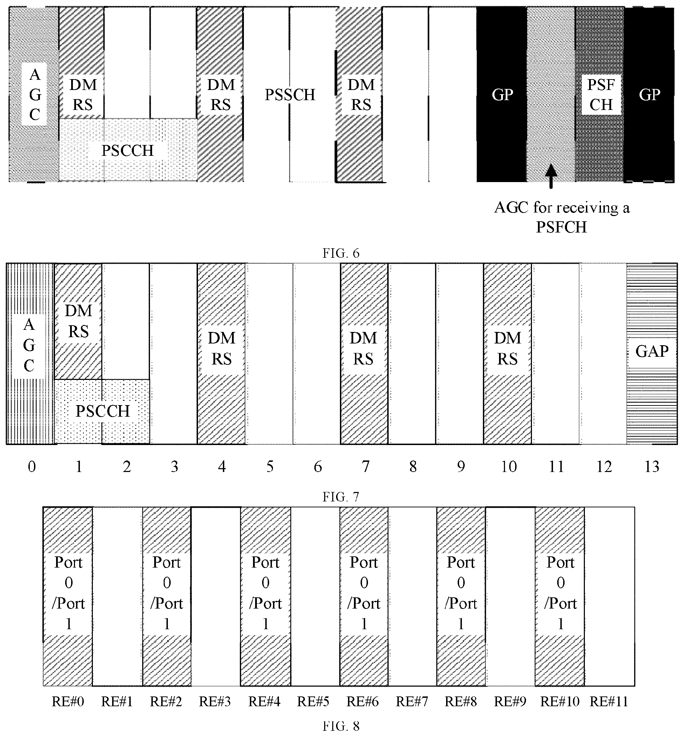

In addition to the PSCCH and the PSSCH, a PSFCH is present in a sidelink slot of the NR-V2X, as shown in FIG. 6. It can be seen that in a slot, a first orthogonal frequency division multiplexing (OFDM) symbol is always reserved for the AGC, and on the AGC symbol, the UE duplicates information transmitted on the second symbol. A last symbol in the slot is reserved for transmission-reception switching, and is used for the UE to switch from a transmission (or reception) state to a reception (or transmission) state. In the remaining OFDM symbols, the PSCCH occupies two or three OFDM symbols starting from the second sidelink symbol. In the frequency domain, the number of physical resource blocks (PRBs) occupied by the PSCCH is within a sub-band range of a PSSCH. In a case where the number of PRBs occupied by the PSCCH is less than a size of a subchannel of the PSSCH, or a frequency-domain resource of the PSSCH includes a plurality of subchannels, the PSCCH and the PSSCH are frequency-division multiplexed on the OFDM symbol where the PSCCH is located.

A demodulation reference signal (DMRS) of the PSSCH in the NR-V2X draws on the design of the NR Uu interface, and adopts a plurality of time-domain PSSCH DMRS patterns In a resource pool, the number of available DMRS patterns is associated with the number of PSSCH symbols in the resource pool. For the specific number of PSSCH symbols (including the first AGC symbol) and the number of PSCCH symbols, the available DMRS patterns and positions of the DMRS symbols within the patterns are listed in Table 1. FIG. 7 is a schematic diagram of a time-domain position of four DMRS symbols when the PSSCH includes 13 symbols. That is, when the number of PSSCH symbols is 13, the number of PSCCH symbols is 2, and the number of DMRS symbols is 4, and the positions of the DMRS symbols are at symbol 1, symbol 4, symbol 7, and symbol 10 respectively.

Table 1 Numbers and positions of DMRS symbols in different numbers of PSSCH symbols and numbers of PSCCH symbols

| Number of PSSCH symbols (including a first AGC symbol) | Position of DMRS symbols (relative to a first AGC symbol position) | | | | | |
| --- | --- | --- | --- | --- | --- | --- |
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

In a case where a plurality of time-domain DMRS patterns are configured in the resource pool, the used specific time-domain DMRS patterns are selected by the transmitter UE and indicated in a first-order SCI. As such, a UE with high-speed mobility may select high-density DMRS patterns to ensure accuracy of channel estimation, and a UE with low-speed mobility may select low-density DMRS patterns, such that the spectral efficiency is improved.

The generation method of a PSSCH DMRS sequence is almost identical to that of a PSCCH DMRS sequence, with the only difference that in n initialization formula cinit of pseudo-random sequence c(m), $N_{ID} = \sum_{i=0}^{L-1} p_i \cdot 2^{L-1-i}$. $p_i$ represents an ith cyclic redundancy check (CRC) of a PSSCH scheduling the PSSCH, L is equal to 24 and represents the number of bits of the PSCCH CRC.

The NR PDSCH and the PUSCH support two types of frequency-domain DMRS patterns, that is, DMRS frequency-domain type 1 and DMRS frequency-domain type 2. Each frequency-domain type includes two different types of symbols, i.e., a single DMRS symbol and a double DMRS symbol. The single-symbol DMRS frequency-domain type 1 supports four DMRS ports, the single-symbol DMRS frequency-domain type 2 supports six DMRS ports, and the number of supported ports is doubled for the double DMRS symbol for both the two RMRS frequency-domain types. However, in the NR-V2X, the PSSCH only needs to support two DMRS ports at most, and thus only the single-symbol DMRS frequency-domain type 1 is supported, as shown in FIG. 8.

**Determination of NR-V2X frequency-domain resources**

Similar to LTE-V2X, frequency-domain resources in an NR-V2X resource pool are also consecutive, an allocation granularity of the frequency-domain resources are allocated at an allocation granularity of subchannel, and the number of PRBs in a subchannel is a value selected from {10, 12, 15, 20, 50, 75, 100}. A minimum size "10 PRBs" of a subchannel is greater than a minimum size "four PRBs" of a subchannel in the LTE-V2X because the frequency-domain resource of the PSCCH in the NR-V2X is within a first subchannel of the associated PSSCH, the frequency-domain resource of the PSCCH is less than or equal to a size of a subchannel of the PSSCH, and the time-domain resource of the PSCCH occupies 2 or 3 OFDM symbols. In a case where the size configuration of the subchannels is small, available resources of the PSCCH are less, the bit rate is increased, and the detection performance of the PSCCH is poor. In the NR-V2X, the size of the subchannel of the PSSCH and the size of the frequency-domain resource of the PSCCH are configured independently, but the frequency-domain resource of the PSCCH should be less than or equal to the size of the subchannel of the PSSCH.

The frequency-domain resources in the PSCCH resource pool and the PSSCH resource pool are determined based on following configuration parameters in the configuration information of the NR-V2X resource pool:

the size of a subchannel (sl-SubchannelSize), indicating the number of consecutive PRBs in a subchannel in the resource pool, which is a value selected from {10, 12, 15, 20, 50, 75, 100};
the number of subchannels (sl-NumSubchannel), indicating the number of subchannels in the resource pool;
the index (sl-StartRB-Subchannel) of a start RB of a subchannel, indicating the index of a start PRB index of a first subchannel in the resource pool;

the number of PRBs (sl-RB-Number), indicating the number of consecutive PRBs in the resource pool;

a PSCCH frequency-domain resource indicator (sl-FreqResourcePSCCH), indicating a size of a frequency-domain resource of the PSCCH, with a range of {10,12,15,20,25}PRBs.

In a case where the UE determines the resource pool for transmitting or receiving the PSSCH, the frequency-domain resource in the resource pool includes sl-NumSubchannel consecutive subchannels starting from a PRB indicated by sl-StartRB-Subchannel. In a case where the number of PRBs in the final sl-NumSubchannel consecutive subchannels is less than the number of PRBs indicated by sl-RB-Number, the remaining PRBs may not be used to transmit or receive the PSSCH.

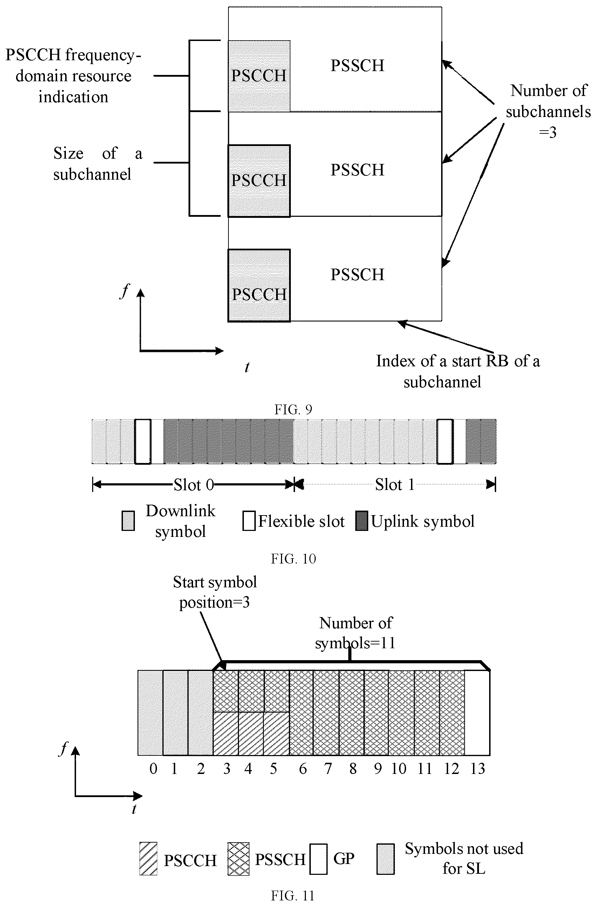

In the NR-V2X, as shown in FIG. 9, the PSCCH and a frequency-domain start position of a first subchannel of the associated PSSCH are aligned, and thus the start position of each subchannel of the PSSCH may be a frequency-domain start position of the PSCCH. The frequency-domain range of the PSCCH resource pool and the PSSCH resource pool are determined based on above parameters.

In the NR-V2X, the PSCCH is used to carry SCI related to resource monitoring, and the SCI includes:

scheduling transmission priority;

frequency-domain resource allocation, indicating the number of frequency-domain resources of the PSSCH in the current slot scheduled by the PSCCH, and the number and start positions of frequency-domain resources of at most two reserved retransmission resources;

time-domain resource allocation, indicating time-domain positions of at most two retransmission resources;

PSSCH reference signal pattern;

second-order SCI format;

second-order SCI rate offset;

number of PSSCH DMRS ports;

modulation and coding scheme (MCS);

MCS form indication;

number of PSFCH symbols;

resource reservation period, resources for transmitting another TB in a next period are reserved. The information bit field does not present in a case where an inter-transport block (TB) resource reservation is not activated in configuration of the resource pool; and

reserved bits: 2 to 4 bits, wherein the specific number of bits is configured or pre-configured by the network.

As the PSCCH and the scheduled PSSCH are generally transmitted in the same slot, and a start position of the PRB occupied by the PSCCH is a start position of a first subchannel of the scheduled PSSCH, the SCI format 1-A does not explicitly indicate the time-frequency-domain start position of the scheduled PSSCH.

**Determination of NR-V2X time-domain resources (slots)**

In the NR-V2X, transmission of the PSCCH/PSSCH is based on a slot-level granularity. That is, only one PSCCH/PSSCH is transmitted in one slot, transmission of a plurality of PSCCHs/PSSCHs in a time division multiplexing (TDM) mode is not supported in one slot, and PSCCHs/PSSCHs between different users are multiplexed in a frequency division multiplexing (FDM) mode in one slot. The time-domain resources of the PSSCH in the NR-V2X use a slot as a granularity. The PSSCH in the NR-V2X occupies some symbols in a slot, which differs from the LTE-V2X in that the PSSCH occupies all time-domain symbols in a subframe because uplink or downlink transmission uses a subframe as a granularity in the LTE system, and the sidelink transmission also uses a subframe as a granularity (special subframes in time division duplex (TDD) system are not used for sidelink transmission). A flexible slot structure is adopted in the NR system, that is, a slot includes an uplink symbol and a downlink symbol to achieve more flexible scheduling and reduce the delay. A subframe of a typical NR system is shown in FIG. 10. The slot includes a downlink symbol(DL), an uplink symbol (UL), and a flexible symbol (Flexible). The downlink symbol is at the start position of the slot, the uplink symbol is at the end position of the slot, and the flexible symbol is between the downlink symbol and the uplink symbol. The number of symbols in each slot is configurable.

As mentioned above, the sidelink transmission system shares carriers with the cellular system, and the sidelink transmission only uses uplink transmission resources of the cellular system. For the NR-V2X, in a case where all time-domain symbols in a slot need to be occupied by the sidelink transmission, the network needs to configure slots of all uplink symbols for sidelink transmission. As such, the uplink and downlink data transmission of the NR system is greatly affected, and the system performance is reduced. Therefore, in the NR-V2X, part of slot symbols in the slot are used for sidelink transmission, that is, part of uplink symbols in the slot are used for sidelink transmission. In addition, considering the AGC symbol and the GP symbol mandatory for the sidelink transmission, in a case where the number of uplink symbols used for sidelink transmission is less, the remaining symbols other than the AGC symbol and the GP symbol used for transmission of effective data are fewer, and the resource utilization is low. Thus, at least seven time-domain symbols (including the GP symbol) are occupied in sidelink transmission in the NR-V2X. In a case where the sidelink transmission system uses a proprietary carrier, a problem of sharing transmission resources with other systems is not present, and all symbols in the slot are used for sidelink transmission.

In the NR-V2X, a start point and a length of a time-domain symbols used for sidelink transmission in a slot are configured based on parameters: sl-StartSymbol and sl-LengthSymbols, and a last symbol in the time-domain symbol used for sidelink transmission is used as the GP. The PSSCH and the PSCCH only use the remaining time-domain symbols. In a case where a transmission resource of the PSFCH is configured with a slot, the time-domain symbol, and the AGC and the GP symbol before that symbol are occupied by the PSSCH and the PSCCH for transmission of the PSFCH.

As shown in FIG. 11, the network configures the start symbol position as 3 and the number of symbols as 11. That is, 11 time-domain symbols from the symbol index 3 in a slot are used for sidelink transmission. The symbol 3 is generally used as an AGC symbol, the symbol 13 is used as a GP, and other symbols are used for transmission of the PSCCH and the PSSCH. The PSCCH occupies 2 time-domain symbols, and the first sidelink symbol includes PSCCH data as data in the AGC symbol is duplication of data in the second sidelink symbol.

In the NR-V2X system, the time-domain resources in the resource pool are indicated by a bitmap. Due to the flexible slot structure in the NR system, the length of the bitmap is also extended, and the supported length of the bitmap is in the range of [10:160]. A method for determining positions of slots belonging to the resource pool within a system frame number (SFN) period using the bitmap and the method in the LTE-V2X are basically the same, and differ in the following aspects:

a total number of slots in an SFN period is $10240 \times 2^9$, wherein the parameter $\mu$ is related to a size of subcarrier spacing;

in a case where at least one time-domain symbol in the time-domain symbols Y, Y+1, Y+2,..., Y+X-1 in a slot is not configured as an uplink symbol by the TDD-UL-DL-ConfigCommon signaling by the network, the slot is not be used for sidelink transmission. Y and X represent SL-startsymbols and sl-LengthSymbols respectively.

The method includes the following processes.

In step 1, slots that do not belong to a resource pool is removed within a SFN period, wherein the slots include a synchronization slots and slots that fail to be used for sidelink transmission. Remaining slots are expressed as a set of remaining slots and are renumbered as $(l_0, l_1, \cdots, l_{(10240 \times 2^{\mu} - N_{S\_SSB} - N_{nonSL}-1)})$.

$N_{S\_SSB}$ represents the number of synchronization slots within an SFN period. The synchronization slot is determined based on the synchronization-related configuration parameter, and is related to a period for transmitting a synchronization signal block (SSB) and a number of TBs of the SSB configured in the period.

$N_{nonSL}$ represents the number of slots that do not conform to the uplink symbol start point and number configuration within an SFN period. In a case where at least one time-domain symbol in the time-domain symbols Y, Y+1, Y+2,..., Y+X-1 is not semi-statically configured as an uplink symbol in the slot, the slot fails to be used for sidelink transmission. Y and X represent SL-Startsymbols and sl-LengthSymbols respectively.

In step 2, the number of reserved slots and corresponding time-domain positions are determined.

In a case where the number of slots in a set of remaining slots is not evenly divided by the length of the bitmap, the number of reserved slots and the corresponding time-domain positions need to be determined. Specifically, a slot is reserved in a case where the slot $l_r$ ($0 \le r < 10240 \times 2^{\mu} - N_{S\_SSB} - N_{nonSL}$) satisfies the following conditions:

$$r = \left\lfloor \frac{m \cdot (10240 \times 2^{\mu} - N_{S\_SSB} - N_{nonSL})}{N_{reserved}} \right\rfloor.$$

$N_{reservea} = (10240 \times 2^{\mu} - N_{S\_SSB} - N_{nonSL}) \bmod L_{bitmap}$ represents the number of reserved slots, $L_{bitmap}$ represents the length of the bitmap, and m = 0,..., $N_{reserved}$ - 1.

In step 3, the reserved slots are removed from the set of remaining slots, and a set of finally remaining slots with the reserved slots removed is represented as a logical slot set. The slots in the slot set are all the slots available for the resource pool. The slots in the logical slot set are renumbered as ($t_0^{SL}, t_1^{SL}, \ldots, t_{T_{max}-1}^{SL}$). $T_{max} = 10240 \times 2^{\mu} - N_{S\_SSB} - N_{nonSL} - N_{reserved}$.

In step 4, the slots belonging to the resource pool in the logical slot set are determined based on the bit bitmap.

The bitmap in the resource pool configuration information is $(b_0, b_1,..., b_{L_{bitmap}-1})$. The slot $t_k^{SL}$ ($0 \le k < (10240 \times 2^{\mu} - N_{S\_SSB} - N_{nonSL} - N_{reserved})$) in the logical slot set belongs to the resource pool in a case where $b_{k'} = 1$. $k' = k \bmod L_{bitmap}$.

In step 5, the slots belonging to the resource pool determined in step 4 are renumbered as $t'^{SL}_i$, $i \in \{0, 1, ..., T'_{max}$-1\}. $T'_{max}$ represents the number of slots in the resource pool.

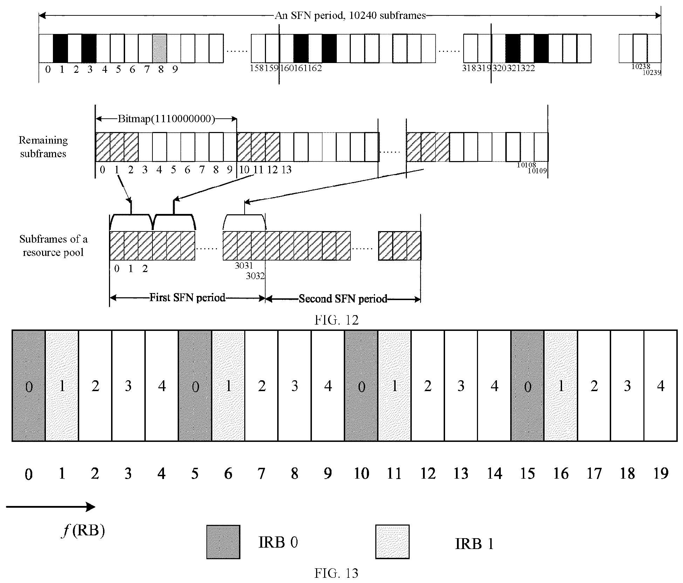

As shown in FIG. 12, an SFN period (or a direct frame number (DFN) period) includes 10240 subframes, the period of the synchronization signal is 160 ms, and a synchronization period includes two synchronous subframes. Thus, an SFN period includes 128 synchronous subframes. The length pf the bitmap for indicating the time-domain resources in the resource pool is 10 bits, and thus two subframes need to be reserved, and the number of remaining subframes is (10240-128-2=10110) that may be evenly divided by the length 10 of the bitmap. The remaining subframes are renumbered as 0, 1, 2...... 10109. The first three bits of the bitmap are all 1, and the remaining seven bits are all 0. That is, in the remaining subframes, the first three subframes of every 10 subframes belong to the resource pool, and the remaining subframes do not belong to the resource pool. As the bitmap needs to be repeated 1011 times in the remaining subframes to indicate whether all subframes belong to the resource pool, and each bitmap period includes 3 subframes, 3033 subframes belong to the resource pool within an SFN period.

**Mode 2 resource selection in the NR V2X**

The NR V2X supports the mode 2 resource selection. That is, based on the detected PSCCH transmitted by other UEs, the UE excludes resources reserved for other UEs, and selects resources for data transmission from the remaining resources.

The mode 2 resource selection is performed based on the following two processes.

In step 1, the UE determines all available resources within a resource selection window as a resource set A.

In a case where the UE transmits data but does not perform monitoring in some slots within the monitoring window, all resources in slots corresponding to the slots within the selection window are excluded. The UE determines the corresponding slots within the selection window based on a set of values of a Resource Reservation Period field in configuration of the resource pool.

In a case where the UE monitors the PSCCH in the monitoring window, and measures a reference signal received power (RSRP) of the PSCCH or an RSRP of the PSSCH scheduled by the PSCCH, the measured RSRP is greater than an SL-RSRP threshold, and the reserved resource is determined to be within the resource selection window based on the resource reservation information in the sidelink control information transmitted in the PSCCH, the corresponding resource is excluded from the resource set A. In a case where the remaining resources in the resource set A are fewer than X% of all resources in the resource set A before resource exclusion, the SL-RSRP threshold is raised by 3 dB, and step 1 is performed again. A possible value of X is in the range of {20, 35, 50}, and the UE determines the parameter X from the set of values based on the priority of the data to be transmitted. The SL-RSRP threshold is related to the priority carried in the PSCCH monitored by the UE and the priority of the data to be transmitted by the UE. The UE determines the remaining resources in the resource set A after resource exclusion as a candidate resource set.

In step 2, the UE randomly selects several resources from the candidate resource set as transmission resources for initial transmission and retransmission.

**Positioning based on the sidelink**

The 3GPP RAN works on "NR positioning enhancement" and "scenarios and requirements for use cases of NR positioning within the network coverage, partially within the network coverage, and outside the network coverage". The work on "scenarios and requirements for use cases of NR positioning within the network coverage, partially within the network coverage, and outside the network coverage" focuses on use cases of the V2X and the public safety. In addition, a security association 1 (SA1) sets a requirement for "ranging-based services" and a positioning accuracy requirement for the use case of the industrial IoT (IIoT) in an outside the network coverage scenario. The 3GPP needs to figure out a sidelink positioning solution to support the use case, the scenario, and the requirement determined in the activities. The 3GPP introduces positioning based on the sidelink positioning reference signal (PRS) to improve the positioning accuracy, especially positioning of the UE outside the cellular network coverage. Based on the current results, the SL PRS is transmitted in a dedicated resource pool. However, the UE further needs to transmit and receive UE mutual discovery information related to sidelink positioning, configuration information, measurement report information, and control and data information related to sidelink communication to support sidelink positioning and sidelink communication. These information needs to be carried over sidelink channels, for example, the PSCCH and/or the PSSCH.

**Sidelink over unlicensed spectrum** (SL-U)

In the SL-U, sidelink transmission needs to meet regulatory requirements, including the requirements for a minimum occupied channel bandwidth (OCB) and a maximum power spectral density (PSD). For the requirement for the OCB, a channel bandwidth occupied by the UE is not less than 80% of a bandwidth of the channel in a case where the UE transmits data over the channel; for the requirement for the maximum PSD, a power for data transmission by the UE is not greater than 10 dBm per 1 MHz. The sidelink transmissions over the unlicensed spectrum adopts an interlaced resource block (IRB) structure to meet the regulatory requirements for the OCB and the PSD. An IRB includes N discrete RBs in the frequency domain, and M IRBs are in the frequency band range. The RBs in the $m^{th}$ IRB are {m, M+m, 2M+m, 3M+m, ...}.

As shown in FIG. 13, the system bandwidth includes 20 RBs and five IRBs (that is, M=5), and each IRB includes four RBs (that is, N=4). The frequency-domain spacing of two adjacent RBs belonging to the same IRB is the same, that is, five RBs. The number in the box in the drawing represents the IRB index.

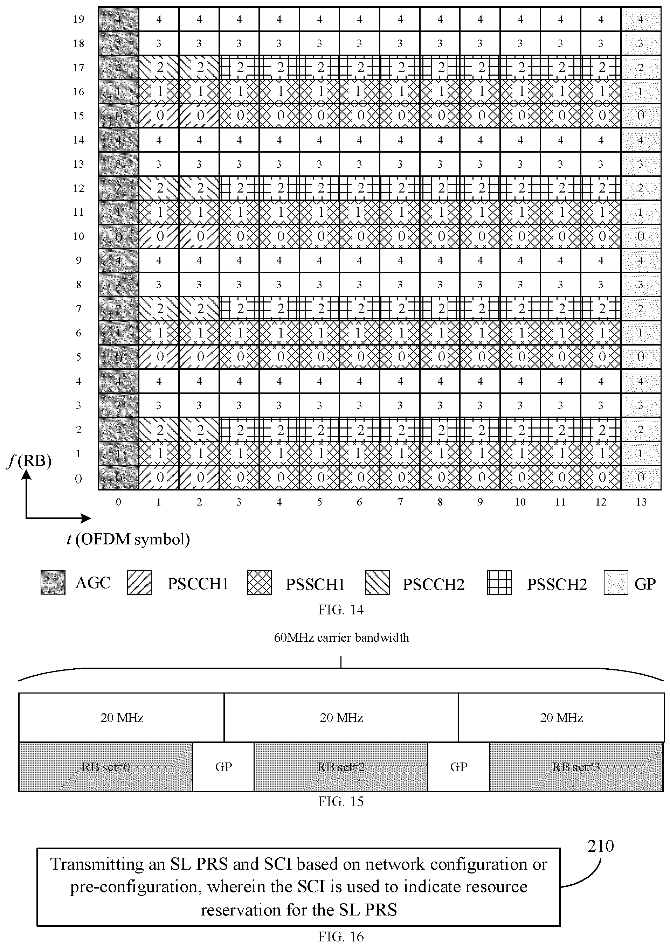

In the SL-U system, in a case where the resource allocation granularity based on the IRB is adopted, the granularity of the channel, for example, the PSCCH and the PSSCH, in the SL-U system is based on the IRB structure. In this case, the frame structure of the SL-U system is shown in FIG. 14. The number in the box in the drawing represents the IRB index. FIG. 14 is a schematic diagram of a frame structure that the slot only includes the PSCCH and the PSSCH and does not include the PSFCH. The bandwidth shown in FIG. 14 includes 20 RBs, five IRB resources are configured, that is, M=5, and each IRB resource includes four RBs. The number in the box represents the IRB index. In FIG. 14, the system configures that the PSCCH occupies an IRB resource and two OFDM symbols in the time domain. The PSSCH takes an IRB as the granularity. The first symbol in the slot is an AGC symbol, and the last symbol is a GP symbol. In FIG. 14, the PSSCH 1 occupies the IRB#0 and the IRB#1, and the corresponding PSCCH 1 occupies the IRB#0. The PSSCH 2 occupies the IRB#2, and the counterpart PSCCH2 occupies the IRB#2. It should be noted that the resource occupied by the second-order SCI and the resources occupied by the PSCCH DMRS and the PSSCH DMRS are not shown in FIG. 14 for simplicity.

The UE accesses the channel through the LBT over the unlicensed spectrum. As shown in FIG. 15, the LBT uses a granularity of 20 MHz in the frequency domain, and each 20 MHz is an RB set. A carrier includes a plurality of RB sets, and a guard period is set between RB sets.

Referring to FIG. 16, a flowchart of a method for transmitting SCI according to the present disclosure is illustrated. The method is applicable to a terminal, and includes the following process.

In **S210,** an SL PRS and SCI are transmitted based on network configuration or pre-configuration, wherein the SCI is used to indicate resource reservation for the SL PRS.

The terminal receives the network configuration from a network device, and transmits the SL PRS and the SCI based on a resource reservation mode (allowing reservation, allowing reservation within a reservable slot/disallowing reservation) indicated in the network configuration. The resource reservation for the SL PRS indicated by the SCI is determined based on the resource reservation mode indicated by the network configuration.

Alternatively, the terminal transmits the SL PRS and the SCI based on a resource reservation mode (allowing reservation, allowing reservation within a reservable slot/disallowing reservation) indicated in the pre-configuration. The resource reservation for the SL PRS indicated by the SCI is determined based on the resource reservation mode indicated by the pre-configuration.

The network device transmits the network configuration to the terminal based on overlapped resources between the SL PRS resource pool and the SL-U communication resource pool, or pre-configures the terminal based on overlapped resources between the SL PRS resource pool and the SL-U communication resource pool. Illustratively, different resource overlapping cases correspond to different network configuration or pre-configuration.

The SL PRS resource pool and the SL-U communication resource pool are resource pools configured on the unlicensed spectrum by the network for the terminal in the sidelink communication. The SL PRS resource pool is used for SL PRS transmission, and the SL-U communication resource pool is used for SL-U communication.

The SL PRS resource pool/the SL-U communication resource pool includes at least one slot in the time domain, and the at least one slot is consecutive, discrete, or periodically repetitive. The SL PRS resource pool/the SL-U communication resource pool includes at least one subchannel in the frequency domain, and the at least one subchannel is consecutive. In some embodiments, the at least one subchannel is discrete or periodically repetitive.

A subchannel includes at least one consecutive PRB. In some embodiments, a subchannel includes 10, 12, 15, 20, 50, 75, or 100 PRBs.

Configuration information of the resource pool (the SL PRS resource pool/the SL-U communication resource pool) includes at least one of: a size of a subchannel (sl-SubchannelSize), indicating the number of consecutive PRBs in a subchannel in the resource pool, which is in the range of {10, 12, 15, 20, 50, 75, 100}; the number of subchannels (sl-NumSubchannel), indicating the number of subchannels in the resource pool; the index (sl-StartRB-Subchannel) of a start RB of a subchannel, indicating a start PRB index of a first subchannel in the resource pool; or the number of PRBs (sl-RB-Number), indicating the number of consecutive PRBs in the resource pool.

The resource overlapping cases of the SL PRS resource pool and the SL-U communication resource pool include, but are not limited to, the following cases.

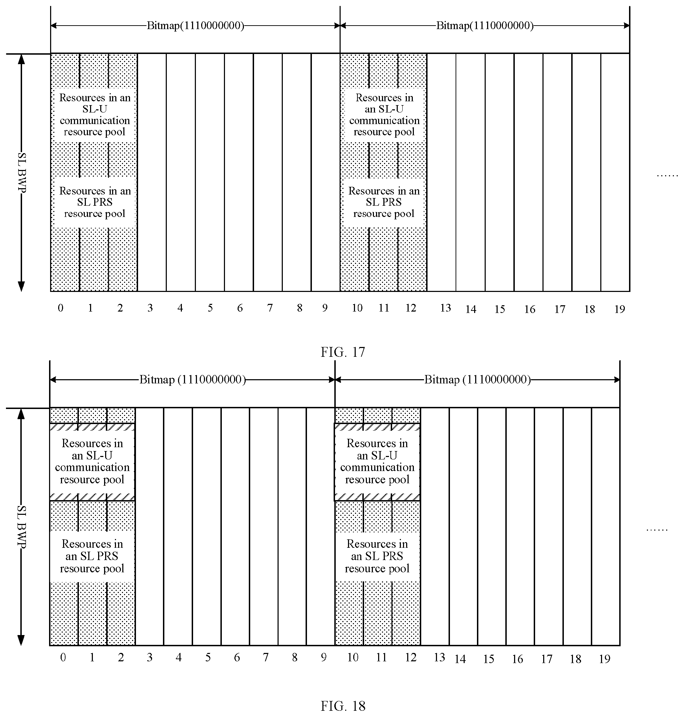

Case (1), the SL PRS resource pool and the SL-U communication resource pool are completely overlapped, for example, as shown in FIG. 17, the SL PRS resource pool are the same as the SL-U communication resource pool in both the time domain and the frequency domain.

Case (2), each slot in the SL PRS resource pool includes a resource overlapped with a resource in the SL-U communication resource pool, for example, as shown in FIG. 18, the SL PRS resource pool are the same as the SL-U communication resource pool in the time domain, and the SL PRS resource pool are overlapped with the SL-U communication resource pool in the frequency domain.

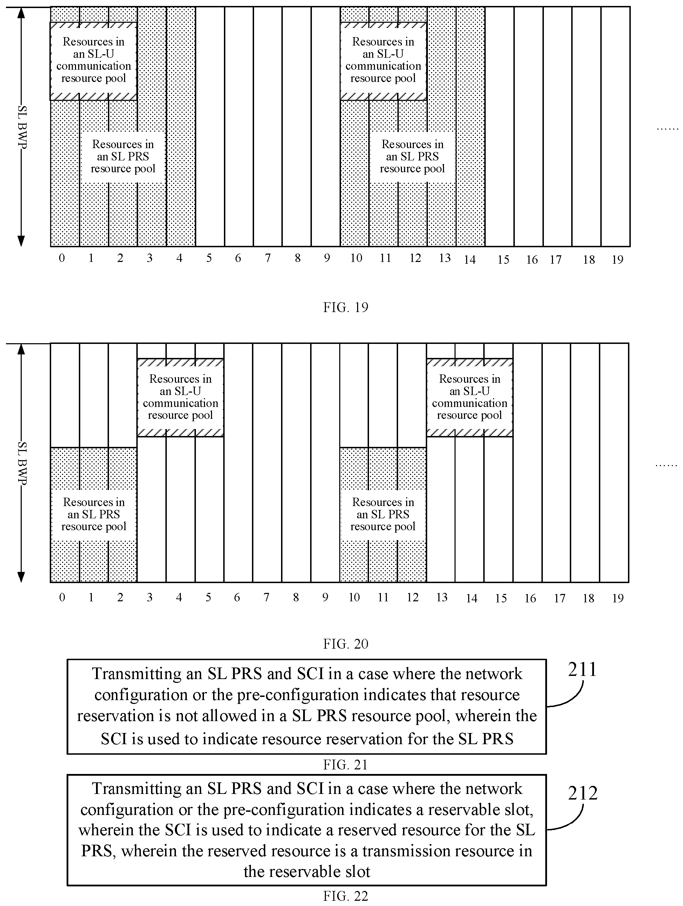

Case (3), part of slots in the SL PRS resource pool belong to the SL-U communication resource pool, and other slots in the SL PRS resource pool do not belong to the SL-U communication resource pool, that is, the SL PRS resource pool includes slots that do not belong to the SL-U communication resource pool. For example, as shown in FIG. 19, the SL PRS resource pool and the SL-U communication resource pool include non-overlapped part in the time domain, and a frequency-domain overlap is present in the overlapped portion in the time domain.

Case (4), the SL PRS resource pool and the SL-U communication resource pool are completely not overlapped. For example, as shown in FIG. 20, the SL PRS resource pool and the SL-U communication resource pool are overlapped neither in the time domain nor in the frequency domain.

In a case where the SL PRS transmission and the SL-U communication are performed in the same slot, transmission collisions occur, such that the receiver does not accurately receive the communication signal. Thus, whether the resource in the SL PRS resource pool is reservable for the terminal that transmits the SL PRS for transmission of the SL PRS is determined based on the overlapping of the SL PRS resource pool and the SL-U communication resource pool in the time domain.

In a case where the SL PRS resource pool and the SL-U communication resource pool are completely overlapped in the time domain, the network configuration or the pre-configuration indicates that the resource in the SL PRS resource pool is not reservable for the terminal that transmits the SL PRS for transmission of the SL PRS, or indicates that the terminal that transmits the SL PRS needs to transmit the SCI identifiable by all terminals to indicate the reserved resource for transmission of the SL PRS.

In a case where the SL PRS resource pool includes the slot that is not overlapped with the SL-U communication resource pool, the network configuration or the pre-configuration indicates that the terminal that transmits the SL PRS reserves the resource in the non-overlapped slot for transmission of the SL PRS.

In some embodiments, the SL-U communication resource pool is a resource pool configured by the network for a backward UE for SL-U communication. The backward UE supports to transmit sidelink data on the unlicensed spectrum, but fails to identify SCI-P. For example, a format of the SCI-P is different from a format of the SCI-C, or a transmission mode of the SCI-P is different from a transmission mode of SCI-C. The SCI-P indicates the SL PRS transmission resource and/or the SL PRS reserved resources. For example, the backward UE only supports the 3GPP R18 SL-U. The backward UE identifies the SCI-C.

In a case where the backward UE fails to identify the SCI-P from the UE that transmits the SL PRS, the backward UE fails to know the resource reserved by the UE that transmits the SL PRS, and the backward UE may use the resources reserved by the UE that transmits SL PRS for SL-U communication. In this case, transmission collisions occur between the SL-U communication and the SL PRS transmission. Therefore, in the method according to the embodiments of the present disclosure, the UE that transmits the SL PRS determines the resource reservation for the SL PRS based on the overlapped resources between the SL PRS resource pool and the SL-U communication resource pool to avoid transmission collisions with the backward UE.

The terminal performing the method is the terminal transmitting the SL PRS, and the terminal transmitting the SL PRS transmits the SL PRS and the SCI in a slot. The SCI is referred to as SCI-P. The SCI is used to indicate the resource for currently transmitting the SL PRS. In some embodiments, the SCI is further used to indicate the reserved resources transmitted by the SL PRS.

The SCI is used to indicate the resource reservation for the SL PRS. In a case where the SCI includes indication information related to the reserved resource, the SCI is used to indicate the reserved resources transmitted by the SL PRS; and in a case where the SCI does not include indication information related to the reserved resource, the SCI is used to indicate that no resource is reserved for the SL PRS.

In some embodiments, a format of the SCI (SCI-P) for indicating the transmission resource and/or the reserved resource for the SL PRS is the same as or different from a format of the SCI (SCI-C) for indicating the transmission resource and/or the reserved resource for the PSSCH for the backward UE, and the SCI-P includes at least one of: identification information of the SL PRS, a time-frequency resource position occupied by the SL PRS, the number of repetitions of the SL PRS and a time-frequency resource position for repetition transmission, a transmission period of the SL PRS, and information related to a transmitter terminal of the SL PRS.

In some embodiments, the UE occupies at least one RB set in transmitting the SL PRS.

In some embodiments, the SL PRS transmitted by the UE is used for absolute positioning, or for relative positioning. That is, the UE that receives the PRS determines a distance and/or direction relative to the UE that transmits the PRS.

In some embodiments, the SL-U communication resource pool is also referred to as a sidelink communication resource pool, a Mode 2 sidelink communication resource pool, and the like.

In summary, in the method according to the embodiments, as some terminals (a backward terminal) fail to identify SCI (or referred to as SCI-P) used to indicate resource reservation for the SL PRS, in a case where the terminal transmits the SCI-P to reserve a part of resources for the SL PRS, the backward terminal fails to know occupation of the part of resources and may still select a part of resources for SL-U communication, such that transmission collisions occur between the SL-U communication and the SL PRS. The terminal transmitting the SL PRS determines resource reservation for the SL PRS based on network configuration or pre-configuration to avoid the transmission collisions occur between the SL-U communication and the SL PRS. The network configuration or pre-configuration is determined based on reservation of an SL PRS resource pool and an SL-U communication resource pool. In a case where resources in the SL PRS resource pool are overlapped with resources in the SL-U communication resource pool, an overlapped resource is not reserved for the SL PRS; and in a case where resources in the SL PRS resource pool are not overlapped with resources in the SL-U communication resource pool, a non-overlapped resource is reserved for the SL PRS, such that interference between SL PRS data and SL-U data is mitigated, and a positioning accuracy of an SL PRS system is improved.

Illustratively, for different resource overlapping cases of the SL PRS resource pool and the SL-U communication resource pool, the following three types of illustrative embodiments are provided to reduce collisions between the transmission resource of the SL-U and the transmission resource of the SL PRS.

1. The UE that transmits the SL PRS does not reserve the resource overlapped with the SL-U communication resource pool used by the backward UE in another slot for transmission of the SL PRS.
2. The UE that transmits the SL PRS reserves the slot that does not belong to the SL-U communication resource pool used by the backward UE for transmission of the SL PRS.
3. The UE that transmits the SL PRS does not reserve the resource overlapped with the SL-U communication resource pool used by the backward SL-U UE in another slot for transmission of the SL PRS, and indicates the reserved resource by the SCI identifiable by the backward UE.

Other illustrative embodiments are also derived based on the method according to the embodiments of the present disclosure, which are not limited to the three types of illustrative embodiments.

The three types of illustrative embodiments are described hereinafter.

**1. The UE that transmits the SL PRS does not reserve the resource overlapped with the SL-U communication resource pool used by the backward UE in another slot for transmission of the SL PRS.**

Referring to FIG. 21, a flowchart of a method for transmitting SCI according to some embodiments of the present disclosure is illustrated. The method is applicable to a terminal, and includes the following process.

**In S211,** an SL PRS and SCI are transmitted in a case where the network configuration or the pre-configuration indicates that resource reservation is not allowed in an SL PRS resource pool does, wherein the SCI is used to indicate resource reservation for the SL PRS.

Alternatively, in a case where the network configuration or the pre-configuration does not indicate a reservable slot, the SCI is not used to indicate a reserved resource for the SL PRS. In some embodiments, the reservable slot belongs to the SL PRS resource pool and does not belong to the SL-U communication resource pool.

In some embodiments, in a case where each slot in the SL PRS resource pool includes a resource overlapped with the SL-U communication resource pool, the network configuration or the pre-configuration indicates that resource reservation is not allowed in the SL PRS resource pool.

In some embodiments, the terminal transmits the SCI and the SL PRS in the same slot. The SCI is used to indicate the resource of the currently transmitted SL PRS, and is not used to indicate the reserved resource for the SL PRS. For example, the terminal transmits the PSCCH and the SL PRS in the same slot, and the PSCCH carries the SCI. Alternatively, the SCI includes first-order SCI and second-order SCI, the terminal transmits the PSCCH, the PSSCH, and the SL PRS in the same slot, the PSCCH carries the first-order SCI, and the PSSCH carries the second-order SCI.

In some embodiments, the resource for currently transmitting the SCI and the SL PRS by the terminal is the transmission resource occupied by the terminal upon successful LBT, or is the resource previously reserved by the terminal.

In the embodiments, the SL PRS resource pool and the SL-U communication resource pool are completely overlapped in the time domain, partially overlapped in the frequency domain, completely overlapped in the frequency domain, or not overlapped in the frequency domain. For example, as shown in FIG. 18, slots in the SL PRS resource pool and the SL-U communication resource pool are the same.

In the embodiments, the SCI transmitted by the terminal is the SCI-P. The format of the SCI-P is different from the format of the SCI-C, and/or, the transmission mode of the SCI-P is different from the transmission mode of the SCI-C. The SCI-P includes at least one of: the identification information of the SL PRS, the time-frequency resource position occupied by the SL PRS, the number of repetitions of the SL PRS and the time-frequency resource position for repetition transmission, the transmission period of the SL PRS, and the information related to the transmitter terminal of the SL PRS.

In the embodiments, the format/transmission mode of the SCI-P is different from the format/transmission mode of SCI-C, and the backward UE fails to decode the SCI (SCI-P) for indicating transmission of the SL PRS. For example, the format of the SCI-P is different from the format of SCI-C, or, the transmission mode of the PSCCH for carrying the SCI-P is different from the transmission mode of the PSCCH for carrying the SCI-C.

As the backward UE fails to identify the SCI-P, the UE that transmits the SL PRS fails to transmit the resource in the reserved slot B of the SCI-P in the slot A for transmission of the SL PRS. A is not equal to B. For example, in a case where each slot in the SL PRS resource pool includes the resource overlapped with the SL-U communication resource pool used by the backward UE, any resource reserved by the UE that transmits the SL PRS for transmission of the SL PRS may be collided with the resource used by the backward UE. For reduction of the resource collisions between the resources, in the SL-U resource pool, the UE that transmits the SL PRS only allows to determine a resource in a slot by Mode 2 resource selection for transmission of the SL PRS, and fails to reserve a resource in another slot by the SCI-P transmitted in a slot for transmission of the SL PRS. As shown in FIG. 18, the slots in the SL PRS resource pool and the sidelink communication resource pool used by the backward UE are the same, and the UE that transmits the SL PRS fails to transmit indication information in any slot in the resource pool to reserve the resource in another slot in the resource pool for transmission of the SL PRS.

In summary, in the method according to the embodiments, as the backward UE fails to identify the SCI-P, in a case where the slots in the SL PRS resource pool and the SL-U communication resource pool are completely overlapped, the terminal that transmits the SL PRS does not reserve the resource for the SL PRS, and determines the resource of the SL PRS by the LBT, such that collisions between the transmission resource of the SL PRS and the communication resource of the SL-U are avoided, the interference between the transmission resource of the SL PRS and the communication resource of the SL-U is mitigated, and the positioning accuracy of the SL PRS system is improved.

**2. The UE that transmits the SL PRS reserves the slot that does not belong to the SL-U communication resource pool used by the backward UE for transmission of the SL PRS.**

Referring to FIG. 22, a flowchart of a method for transmitting SCI according to some embodiments of the present disclosure is illustrated. The method is applicable to a terminal, and includes the following process.

**In S212,** an SL PRS and SCI are transmitted in a case where the network configuration or the pre-configuration indicates a reservable slot, wherein the SCI is used to indicate a reserved resource for the SL PRS, wherein the reserved resource is a transmission resource in the reservable slot.

In some embodiments, the reservable slot belongs to the SL PRS resource pool and does not belong to the SL-U communication resource pool.

In some embodiments, the terminal transmits the SCI and the SL PRS in the same slot. The SCI is used to indicate the resource of the currently transmitted SL PRS and the reserved resource for the SL PRS. For example, the terminal transmits the PSCCH and the SL PRS in the same slot, and the PSCCH carries the SCI. Alternatively, the SCI includes first-order SCI and second-order SCI, the terminal transmits the PSCCH, the PSSCH, and the SL PRS in the same slot, the PSCCH carries the first-order SCI, and the PSSCH carries the second-order SCI.

In some embodiments, the resource for currently transmitting the SCI and the SL PRS by the terminal is the transmission resource occupied by the terminal upon successful LBT, or is the resource previously reserved by the terminal.

In the embodiments, the SL PRS resource pool and the SL-U communication resource pool are completely overlapped in the time domain, not completely overlapped in the time domain (the SL PRS resource pool includes the slot that does not belong to the SL-U communication resource pool), partially overlapped in the frequency domain, completely overlapped in the frequency domain, or not overlapped in the frequency domain. For example, as shown in FIG. 19, the SL PRS resource pool includes the slot that does not belong to the SL-U communication resource pool, that is, the slot 3, the slot 4, the slot 13, and the slot 14. The slot 3, the slot 4, the slot 13, and the slot 14 are the reservation slots, and the terminal indicates the resource in the reservable slot as the reserved resource for the SL PRS in the SCI.

In the embodiments, the SCI transmitted by the terminal is the SCI-P. The format of the SCI-P is different from the format of the SCI-C, and/or, the transmission mode of the SCI-P is different from the transmission mode of the SCI-C. The SCI-P includes at least one of: the identification information of the SL PRS, the time-frequency resource position occupied by the SL PRS, the number of repetitions of the SL PRS and the time-frequency resource position for repetition transmission, the transmission period of the SL PRS, and the information related to the transmitter terminal of the SL PRS.

In the embodiments, the backward UE fails to decode the SCI (SCI-P) for indicating transmission of the SL PRS. For example, the format of the SCI-P is different from the format of SCI-C, or, the transmission mode of the PSCCH for carrying the SCI-P is different from the transmission mode of the PSCCH for carrying the SCI-C.

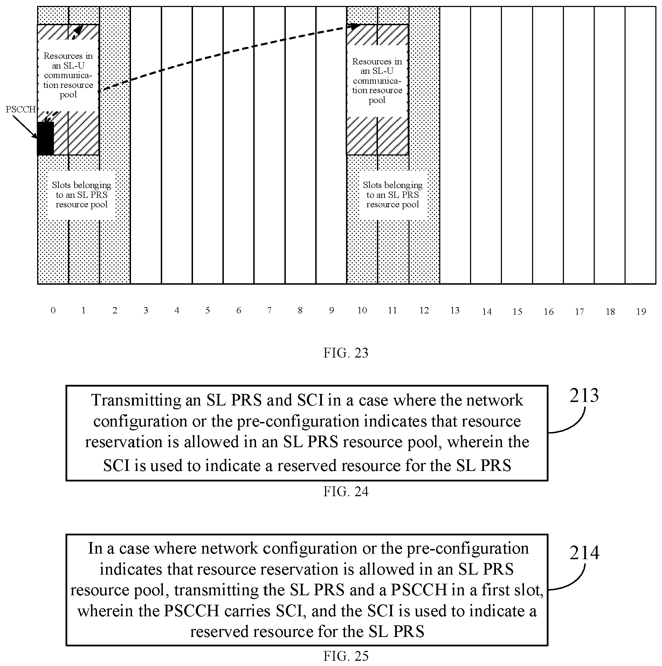

The UE transmits indication information in the slot A to reserve the resource in the slot B for transmission of the SL PRS, but the slot B should belong to a specific slot range (referred to as a reservable slot). In some embodiments, the reservable slot does not belong to the SL-U communication resource pool used by the backward UE. For example, in a case where some slots in the SL PRS resource pool belong to the sidelink communication resource pool used by the backward UE, and other slots do not belong to the Mode 2 sidelink communication resource pool (the SL-U communication resource pool) used by the backward UE, the UE that transmits the SL PRS reserves the resources in the slots for transmission of the SL PRS. As shown in FIG. 23, the slot#2, slot#12 ... are in the SL PRS resource pool, and do not belong to the Mode 2 sidelink communication resource pool (the SL-U communication resource pool) used by the backward UE, and are used as reservable slots. The UE that transmits the SL PRS reserves the resources in the slots based on the indication information from another slot for transmission of the SL PRS. As the backward UE does not transmit the sidelink data in the reservable slot, the resource reserved by the SL PRS does not collide with the resource of the backward UE.

For example, as shown in FIG. 19, the reservable slots includes the slot 3, the slot 4, the slot 13, and the slot 14. In a case where the terminal transmits the SCI and the SL PRS in the slot 2, the SCI indicates the transmission resource in the reserved slot 13 for transmission of the SL PRS.

In some embodiments, the reservable slot is indicated by the configuration of the resource pool and the pre-configuration signaling. For example, the reserved slot in the configuration of the resource pool is determined as the reservable slot, or, the reserved slot indicated in the pre-configuration signaling is determined as the reservable slot. The configuration of the resource pool includes configuration information of the SL PRS resource pool and configuration information of the SL-U communication resource pool.

Specifically, the UE that transmits the SL PRS determines the reservable slot by the configuration of the resource pool and the pre-configuration signaling. For example, the reservable slot is indicated by the configuration of the resource pool or the pre-configuration signaling in a specific information field (such as a specific bitmap); or, the UE that transmits the SL PRS determines the reservable slot through specific rules. For example, in a case where the SL PRS resource pool includes the slot for transmission of the S-SSB or includes the reserved slot in determining process of the SL-U communication resource pool, the slot is determined as the reservable slot. The S-SSB slot is the slot configured for transmission of the S-SSB on the current SL bandwidth part (BWP). The UE transmits the SL PRS only using the frequency-domain resource that is not used for transmission of the S-SSB in the slot.

It should be noted that Embodiment 1 may be regarded as a special case of Embodiment 2. That is, in a case where the UE that transmits the SL PRS determines that the SL PRS resource pool includes a reservable slot, the resource in the reservable slot is reserved for transmission of the SL PRS (that is, Embodiment 2); otherwise, the resources in the different slots are reserved for transmission of the SL PRS (that is, Embodiment 1).

In some embodiments, for any UE that transmits the SL PRS, whether the resource in a reservable slot is reserved by another UE by detecting the indication information that has been transmitted by another UE, such that whether the resource in the slot is selected or reserved is determined for transmission of the SL PRS.

In summary, in the method according to the embodiments, as the backward UE fails to identify the SCI-P, in a case where the slots in the SL PRS resource pool and the SL-U communication resource pool are not overlapped, the terminal that transmits the SL PRS reserves the resource in the non-overlapped slots for transmission of the SL PRS, such that collisions between the transmission resource of the SL PRS and the communication resource of the SL-U are avoided, the interference between SL PRS data and SL-U data is mitigated, and the positioning accuracy of the SL PRS system is improved.

**3. The UE that transmits the SL PRS does not reserve the resource overlapped with the SL-U communication resource pool used by the backward SL-U UE in another slot for transmission** of the **SL PRS, and indicates the reserved resource by the SCI identifiable by the backward UE.**

Referring to FIG. 24, a flowchart of a method for transmitting SCI according to some embodiments of the present disclosure is illustrated. The method is applicable to a terminal, and includes the following process.

**In S213,** an SL PRS and SCI are transmitted in a case where the network configuration or the pre-configuration indicates that resource reservation is allowed in an SL PRS resource pool, wherein the SCI is used to indicate a reserved resource for the SL PRS.

In some embodiments, the network configuration or the pre-configuration indicates that resource reservation is allowed in the SL PRS resource pool, and the format of the SCI-P is the same as the format of the SCI-C, and/or, the transmission mode of the SCI-P is the same as the transmission mode of the SCI-C. As such, the terminal reserves the resource in the SL PRS resource pool and indicates the reserved resource by the SCI-P, and the backward UE parses the SCI-P to know that the resource is reserved.

In some embodiments, resources in the SL PRS resource pool are overlapped with resources in the SL-U communication resource pool.

In some embodiments, the UE determines whether resources in the SL PRS resource pool are overlapped with resources in the SL-U communication resource pool based on the configuration information of the SL PRS resource pool. The UE reserves the resource in another slots overlapped with the SL-U communication resource pool used by the UE for transmission of the SL PRS, and indicates the reserved resource based on the SCI identifiable by the UE. Alternatively, the UE reserves the resource in another slot in the SL PRS resource pool for transmission of the SL PRS based on the network configuration or pre-configuration, and indicates the reserved resource based on the SCI identifiable by the UE.

In the embodiments, the slots occupied by the SL PRS resource pool and the SL-U communication resource pool used by the backward UE are overlapped, and the frequency-domain resources occupied by the slots are the same or different. In a case where the UE that transmits the SL PRS transmits the SL PRS in the slot A, and reserves one or more subsequent overlapped slots for transmission of the SL PRS, the UE transmits the PSCCH in the slot A to indicate the reserved information.

In the embodiments, the SCI transmitted by the terminal is the SCI-P. The format of the SCI-P is the same as the format of the SCI-C are the same, and the transmission mode of the SCI-P and the transmission mode of the SCI-C. That is, the format of the SCI-P is the same as the format of the SCI-C, and the transmission mode of the PSCCH for carrying the SCI-P is the same as the transmission mode of the PSCCH for carrying the SCI-C. The SCI-P includes at least one of: the identification information of the SL PRS, the time-frequency resource position occupied by the SL PRS, the number of repetitions of the SL PRS and the time-frequency resource position for repetition transmission, the transmission period of the SL PRS, and the information related to the transmitter terminal of the SL PRS.

The UE generally transmits the SL PRS and the PSCCH and/or the PSSCH for indicating transmission of the SL PRS in the same slot.

Specifically, in a case where the PSCCH in the SL PRS resource pool is transmitted using consecutive RBs, the PSCCH carrying the SCI is transmitted over the consecutive RBs. That is, in a case where the PSCCH in the SL PRS resource pool is transmitted using consecutive RBs, the PSCCH carrying the SCI-P and the SCI-C is transmitted over the consecutive RBs.

In a case where the PSCCH in the SL PRS resource pool is transmitted using consecutive IRB structures, the PSCCH carrying the SCI is transmitted using the consecutive IRB structures. That is, in a case where the PSCCH in the SL PRS resource pool is transmitted using consecutive IRB structures, the PSCCH carrying the SCI-P and the SCI-C is transmitted using the consecutive IRB structures.

In the embodiments, the SL PRS resource pool and the slot occupied by the SL communication resource pool used by the backward UE are partially overlapped or completely overlapped. In a case where the terminal that transmits the SL PRS wants to reserve the transmission resource in the overlapped slot for transmission of the SL PRS, the terminal that transmits the SL PRS needs to transmit the SCI that can be parsed by the backward UE to indicate the reserved resource.

In some embodiments, the SCI is transmitted in various methods. For example, the SCI is carried in the PSCCH for transmission, or the SCI is carried in the PSCCH and the PSSCH for transmission. The method for transmitting the SCI includes the following methods.

**Method 1,** the terminal transmits the PSCCH in the slot transmitting the SL PRS, and the PSCCH carries the SCI.

· Method 1.1, the SL PRS is not transmitted on a symbol where the PSCCH is located, and the PSCCH is transmitted in a first subchannel for transmitting the SL PRS.
· Method 1.2, the SL PRS is not transmitted on a symbol where the PSCCH is located, a plurality of groups of resources for transmitting the PSCCH and the SL PRS are included in a slot, and different PSCCH resources correspond to different resources of the SL PRS.
· Method 1.3, the SL PRS is transmitted on a symbol where the PSCCH is located.

**Method** 2, the terminal transmits the PSCCH and the PSSCH in the slot transmitting the SL PRS, the PSCCH carries the first-order SCI, and the PSSCH carries the second-order SCI.

· Method 2.1, the SL PRS is not transmitted on a symbol where the PSCCH is located, the PSCCH is transmitted in a first subchannel for transmitting the SL PRS, and the PSSCH is transmitted in remaining IRBs on the symbol where the PSCCH is located.
· Method 2.2, the SL PRS is not transmitted on a symbol where the PSCCH is located, a plurality of groups of resources for transmitting the PSCCH, the PSSCH, and the SL PRS are in a slot, and different PSCCH/PSSCH resources correspond to different resources of the SL PRS.
· Method 2.3, the SL PRS is transmitted on a symbol where the PSCCH is located.

The methods are described hereinafter.

**Method 1, the terminal transmits the PSCCH in the slot transmitting the SL PRS, and the PSCCH carries the** SCI.

Referring to FIG. 25, S213 includes S214.

**In S214,** in a case where network configuration or the pre-configuration indicates that resource reservation is allowed an SL PRS resource pool, the SL PRS and a PSCCH are transmitted in a first slot, wherein the PSCCH carries SCI, and the SCI is used to indicate a reserved resource for the SL PRS.

In some embodiments, resources in the SL PRS resource pool are overlapped with resources in the SL-U communication resource pool in the frequency domain in the slot where the reserved resource is located.

That is, the PSCCH is transmitted in the slot transmitting the SL PRS. The UE that transmits the SL PRS only transmits the PSCCH in the slot transmitting the SL PRS, and does not transmit the PSSCH in the slot. The UE indicates transmission of the SL PRS and/or reservation of the transmission resource of the SL PRS only by the SCI-P carried in the PSCCH.

Specifically, the time-frequency resource for transmitting the PSCCH includes the following cases.

**Method 1.1,** the SL PRS is not transmitted on the symbol where the PSCCH is located, and the PSCCH is transmitted in the first subchannel for transmitting the SL PRS.

The time-frequency resource of the PSCCH includes part or all of IRBs/RBs in a first subchannel for transmitting the SL PRS on an OFDM symbol for transmitting the PSCCH in the first slot. The OFDM symbol for transmitting the PSCCH is determined based on the network configuration or a set rule.

The time-frequency resource of the SL PRS includes part or all of IRBs/RBs in a subchannel for transmitting the SL PRS on OFDM symbols other than the OFDM symbol for transmitting the PSCCH in the first slot.

The SL PRS is not transmitted on the OFDM symbol where the PSCCH is located, and the UE occupies one or all IRBs in the first subchannel for transmitting the SL PRS on the OFDM symbol for transmitting the PSCCH in the slot to transmit the PSCCH.

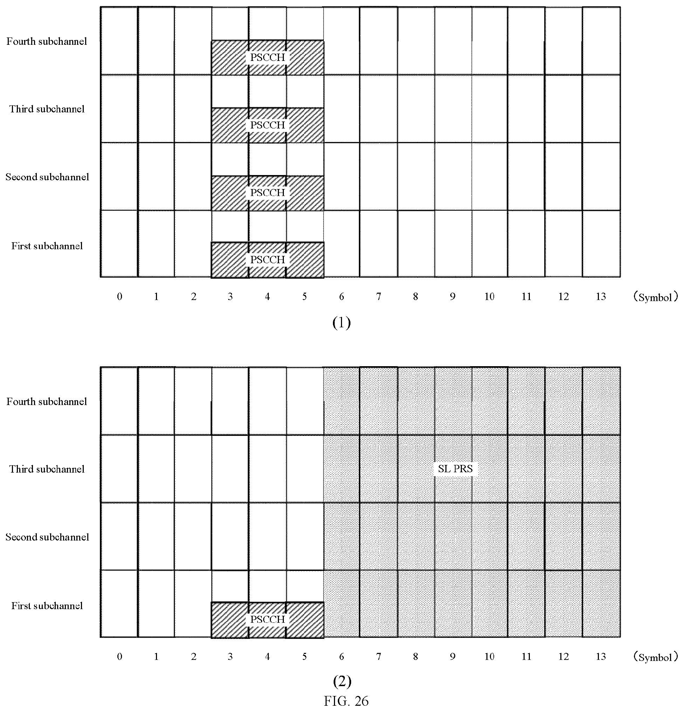

For example, as shown in FIG. 26(1), FIG. 26(1) is a diagram of a time-frequency resource for transmitting the SL PRS in the first slot. The first slot includes 14 symbols, and the frequency-domain resource for transmitting the SL PRS includes four subchannels. The symbol 3, the symbol 4, and the symbol 5 are OFDM symbols for transmitting the PSCCH. Based on the diagram of a time-frequency resource shown in FIG. 26(1) and as shown in FIG. 26(2), the time-frequency resource for transmitting the PSCCH in the method 1.1 are part or all IRBs/RBs in the first subchannels on the symbol 3, the symbol 4, and the symbol 5, and the time-frequency resource for transmitting the SL PRS are part or all IRBs/RBs in the four subchannels on the symbols 6-13.

In a case where the SL PRS is transmitted in the first slot, the frequency-domain resource for transmitting the SL PRS includes part or all PRBs in the SL PRS resource pool. That is, in a case where the UE transmits the SL PRS in a slot, the UE occupies all or part PRBs in the resource pool.

**Method 1.2,** the SL PRS is not transmitted on a symbol where the PSCCH is located, a plurality of groups of resources for transmitting the PSCCH and the SL PRS are included in a slot, and different PSCCH resources correspond to different resources of the SL PRS.

A plurality of groups of time-frequency resources of the PSCCH are included in the first slot. A group of time-frequency resources of the PSCCH includes part or all IRBs on the OFDM symbol for transmitting the PSCCH; a time-frequency resource of the SL PRS is in an interlaced structure; one or more time-frequency resources of the SL PRS are included in the first slot; a time-frequency resource of the SL PRS includes a group of interlaced resources on part or all OFDM symbols other than the OFDM symbol for transmitting the PSCCH in the first slot; and the plurality of groups of time-frequency resources of the PSCCH and the plurality of time-frequency resources of the SL PRS are in one-to-one correspondence with each other.

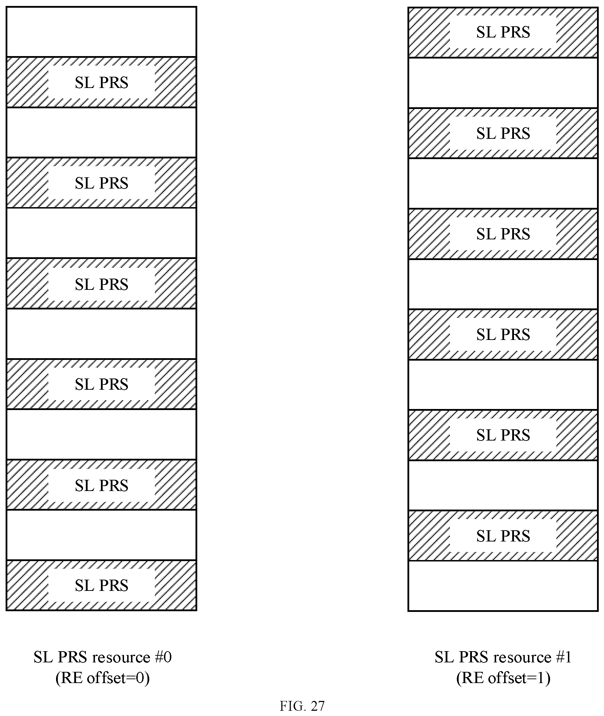

The SL PRS is in an interlaced structure, and different resource element (RE) offsets on the first OFDM symbol for transmitting the SL PRS in the slot correspond to different resources of the SL PRS. An example is shown in FIG. 27, a size of the interlace is 2, and the resources of the SL PRS are ranked in an ascending order. As shown in FIG. 27, a group of resources of the SL PRS with the RE offset being 0 is SL PRS resource#0, and a group of resources of the SL PRS with the RE offset being 1 is SL PRS resource#1.

In some embodiments, the size of the interlace of the interlaced structure of the SL PRS is a number of/a number of groups of time-frequency resources of the SL PRS. The size of the interlace of the interlaced structure of the SL PRS is x, x groups of resources of the SL PRS are present, and x is a positive integer. In some embodiments, the number of groups of resources of the PSCCH is the same as a number of groups of resources of the SL PRS, such that the groups of resources of the PSCCH are in one-to-one correspondence with the groups of resources of the SL PRS.

For example, the SL PRS resource pool includes a subchannels in the frequency domain in the first slot, the resources for transmitting the PSCCH in each subchannel are one group of PSCCH resources, and the SL PRS resource pool includes a groups of PSCCH resources. The a groups of PSCCH resources are ranked in an ascending order in the frequency domain, and a is a positive value. The resource of the SL PRS is in an interlaced structure in the first slot, and a size of the interlace is a. Thus, a groups of resources of the SL PRS are present, and a groups of resources of the SL PRS are ranked in an ascending order of the RE offset. An $i^{th}$ group resource of the PSCCH corresponds to an $i^{th}$ group of resources of the SL PRS. In a case where the SL PRS is transmitted using the $i^{th}$ group of resources of the SL PRS, the PSCCH is transmitted using the $i^{th}$ group resource of the PSCCH, and i is an integer not greater than a.

That is, in the method, a group of resources of the PSCCH are one or more IRBs in a subchannel. The plurality of time-frequency resources of the SL PRS are ranked based on the RE offset of the interlaced structure. In a case where the SL PRS is transmitted using an $i^{th}$ time-frequency resource of the SL PRS, the time-frequency resource for transmitting the PSCCH is part or all IRBs for transmitting the PSCCH transmission in an $i^{th}$ subchannel in the SL PRS resource pool, and i is an integer.

In some embodiments, the frequency-domain resource indicated by the SCI in the PSCCH is a last subchannel occupied by the SL PRS from an $i^{th}$ subchannel. That is, the frequency-domain resource for transmitting the SL PRS is: an $i^{th}$ group of resources of the SL PRS from the $i^{th}$ subchannel to the last subchannel in the SL PRS resource pool; and the time-domain resource is the symbol that is not used to transmit the PSCCH in the first slot.

That is, the time-frequency resource for transmitting the SL PRS is an $i^{th}$ time-frequency resource of the SL PRS in the frequency-domain from the $i^{th}$ subchannel to the last subchannel in the SL PRS resource pool on the OFDM symbol after the OFDM symbol for transmitting the PSCCH in the first slot.

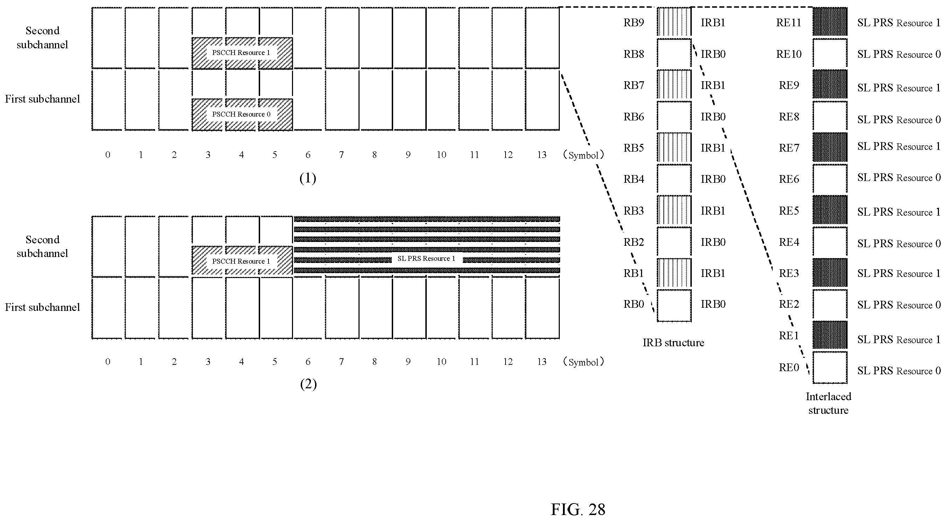

For example, as shown in FIG. 28(1), FIG. 28(1) is a diagram of a time-frequency resource for transmitting the SL PRS in the first slot. The first slot includes 14 symbols, and the frequency-domain resource for transmitting the SL PRS includes two subchannels, a subchannel includes 10 RBs, and an RB includes 12 REs. The SL PRS is in an interlaced structure, a size of the interlace is 2, the RE offset 0 corresponds to the SL PRS resource 0, and the RE offset 1 corresponds to the SL PRS resource 1. Symbol 3, symbol 4, and symbol 5 are OFDM symbols for transmitting the PSCCH. The resource for transmitting the PSCCH in the first subchannel is the PSCCH resource 0, and the resource for transmitting the PSCCH in the second subchannel is the PSCCH resource 1. Based on the diagram of the time-frequency resource shown in FIG. 28(1), the SL PRS resource 0 corresponds to the PSCCH resource 0, and the SL PRS resource 1 corresponds to the PSCCH resource 1. As shown in in FIG. 28(2), in a case where the SL PRS is transmitted using the SL PRS resource 1 in the method 1.2, the time-frequency resource for transmitting the PSCCH is the PSCCH resource 1 in the second subchannel on symbol 3, symbol 4, symbol 5, and the time-frequency resource for transmitting the SL PRS is on symbols 6-13, and the RE offset being 1 corresponds to the SL PRS resource 1 in the second subchannel.

Alternatively, b symbols for transmitting the PSCCH are included in the first slot, the resources for transmitting the PSCCH in the symbol are a group of resources of the PSCCH, b groups of resources of the PSCCH are present, and the b groups of resources of the PSCCH are ranked in an ascending order in the time domain. b is a positive value. The resource of the SL PRS is in an interlaced structure, and a size of the interlace is b. Thus, b groups of resources of the SL PRS are present, and the b groups of resources of the SL PRS are ranked in an ascending order based on the RE offset. An $i^{th}$ group resources of the PSCCH corresponds to an $i^{th}$ group resources of the SL PRS. In a case where the SL PRS is transmitted using the $i^{th}$ group resources of the SL PRS, the PSCCH is transmitted using the $i^{th}$ group resources of the PSCCH, and i is an integer not greater than b.

In the method, a plurality of UEs transmit the SL PRS in the same slot through a frequency division multiplexing mode.

**Method 1.3,** the SL PRS is transmitted on a symbol where the PSCCH is located.

The time-frequency resource of the PSCCH includes part or all of IRBs/RBs in a first subchannel for transmitting the SL PRS on an OFDM symbol for transmitting the PSCCH in the first slot. The time-frequency resource of the SL PRS includes a first-part resource and a second-part resource. The first-part resource includes part or all of IRBs/RBs not for transmitting the PSCCH on the OFDM symbol for transmitting the PSCCH in the first slot, and the second-part resource includes part or all of IRBs/RBs in a subchannel for transmitting the SL PRS on OFDM symbols other than the OFDM symbol for transmitting the PSCCH in the first slot.

In some embodiments, the second-part resource includes part or all of IRBs/RBs in a subchannel for transmitting the SL PRS on OFDM symbols after the OFDM symbol for transmitting the PSCCH in the first slot.

Illustratively, the terminal transmits the SL PRS on the OFDM symbol where the PSCCH is located, and the receiver UE does not need to process the SL PRS transmitted on the OFDM symbol. In a case where a terminal capability of the receiver UE is great, the receiver UE processes the SL PRS transmitted on the OFDM symbol. In a case where a terminal capability of the receiver UE is less, the receiver UE does not process the SL PRS transmitted on the OFDM symbol.

In some embodiments, in determining the RE offsets of the SL PRS on different OFDM symbols, the OFDM symbols for transmitting the PSCCH are not considered. That is, the RE offset of the interlaced structure of the SL PRS is calculated based on the RE offset on the OFDM symbol in the second-part resource, and the RE offset on the OFDM symbol in the first-part resource is not considered.

In the method, the PSCCH carrying the SCI-P is transmitted in part or all IRBs in the first subchannel occupied by the SL PRS. The UE transmits the SL PRS in IRBs other than the IRB for transmitting the PSCCH in the OFDM symbol of the PSCCH. Assuming that 0, 1,..., C-1 OFDM symbols are OFDM symbols including the PSCCH, the OFDM symbols from the symbol C are the OFDM symbol for transmitting the SL PRS.

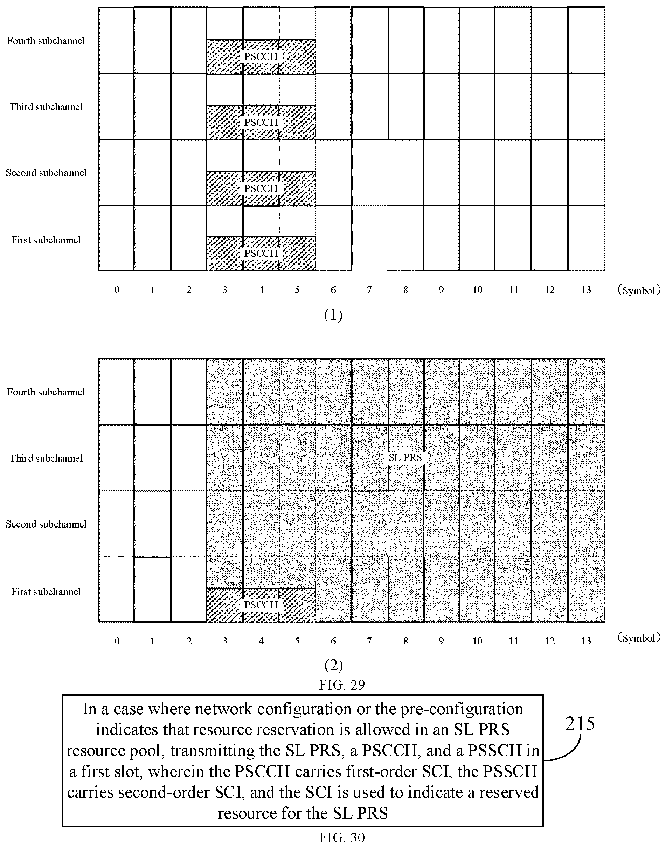

For example, as shown in FIG. 29(1), FIG. 29(1) is a diagram of a time-frequency resource for transmitting the SL PRS in the first slot. The first slot includes 14 symbols, and the frequency-domain resource for transmitting the SL PRS includes four subchannels. Symbol 3, symbol 4, and symbol 5 are OFDM symbols for transmitting the PSCCH. Based on the diagram of the time-frequency resource shown in FIG. 29(1) and as shown in FIG. 29(2), the time-frequency resource for transmitting the PSCCH in the method 1.3 are part or all IRBs/RBs in the first subchannels on symbol 3, symbol 4, and symbol 5, and the time-frequency resource for transmitting the SL PRS are part or all IRBs/RBs in the four subchannels on symbols 3-13.

Illustratively, a sequence of the SL PRS transmitted on the first-part resource and a position of the RE for transmitting the SL PRS are determined based on the following methods.

(1) The sequence of the SL PRS transmitted on the first-part resource is the same as the sequence of the DMRS of the PSCCH, and the position of the RE occupied on the RB by the SL PRS transmitted on the first-part resource is the same as the position of the RE occupied on the RB by the DMRS of the PSCCH.

The sequence of the SL PRS transmitted by the UE on the OFDM symbol where the PSCCH is located is repetition of the DMRS of the PSCCH in the frequency domain, and the RE occupied on each PRB is the same as the RE occupied by the DMRS on the RB occupied by the PSCCH.

For example, the sequence of the DMRS of the PSCCH is 010101, the sequence of the SL PRS transmitted on the first-part resource is also 010101. The DMRS of the PSCCH is transmitted on the RE#2 of the RB, and the SL PRS transmitted on the first-part resource is also transmitted on the RE#2 of the RB.

(2) The sequence of the SL PRS transmitted on the first-part resource is a subsequent part of the sequence of the DMRS of the PSCCH, and the position of the RE occupied on the RB by the SL PRS transmitted on the first-part resource coincides with the position of the RE occupied on the RB by the DMRS of the PSCCH.

The sequence of the SL PRS transmitted by the UE on the OFDM symbol where the PSCCH is located is the sequence of the DMRS of the PSCCH, and the RE occupied on each PRB is the same as the RE occupied by the DMRS on the RB occupied by the PSCCH.

The sequence of the DMRS is a sequence that is extracted from a preparatory sequence, and the preparatory sequence is an infinite sequence. For example, the preparation sequence is 0101, 0100, 0111, 0000, 1111..., the sequence of the DMRS is a first segment 0101, and SL PRS transmitted on the first-part resource is a subsequent sequence: 0100, 0111, 0000, 1111. For example, the sequence of the SL PRS transmitted on the first symbol is 0100, the sequence of the SL PRS transmitted on the second symbol is 0111, the sequence of the SL PRS transmitted on the third symbol is 0000, and the sequence of the SL PRS transmitted on the fourth symbol is 1111.

(3) The sequence of the SL PRS transmitted on the first-part resource is the same as the sequence of the SL PRS transmitted on the first symbol of the second-part resource, and the position of the RE occupied on the RB by the SL PRS transmitted on the first-part resource coincides with the position of the RE occupied on the RB by the SL PRS transmitted on the first symbol of the second-part resource.

In some embodiments, the first symbol of the second-part resource is a $C^{th}$ symbol in the first slot. The sequence of the SL PRS transmitted by the UE on the OFDM symbol where the PSCCH is located is the sequence of the SL PRS transmitted on a $C^{th}$ OFDM symbol, and the RE occupied on each PRB is the same as the RE occupied by the SL PRS on the $C^{th}$ OFDM symbol.

For example, the sequence of the SL PRS transmitted on the $C^{th}$ OFDM symbol is 010101, the sequence of the SL PRS transmitted on the first-part resource is also 010101. The SL PRS on the $C^{th}$ OFDM symbol is sent on the RE#2 of the RB, and the SL PRS transmitted on the first-part resource is also transmitted on the RE#2 of the RB.

(4) The sequence of the SL PRS transmitted on a $j^{th}$ symbol of the first-part resource is the same as a sequence of the SL PRS transmitted on a $j^{th}$ symbol of the second-part resource, j being an integer, and a position of an RE occupied on an RB by the SL PRS transmitted on the $j^{th}$ symbol of the first-part resource coincides with a position of an RE occupied on the RB by the SL PRS transmitted on the $j^{th}$ symbol of the second-part resource.

In some embodiments, the first-part resource includes OFDM symbols 0-(C-1) in the first slot, and the OFDM symbol of the second-part resource starts from the $C^{th}$ symbol in the first slot. The sequence of the SL PRS transmitted by the UE on the OFDM symbols 0,1,..., C-1 where the PSCCH is located is the sequence of the SL PRS transmitted on C OFDM symbols for transmitting SL PRS from the OFDM symbol C, and the occupied REs are the same as the C OFDM symbols.

For example, the symbols for transmitting the PSCCH are symbols 0-2, and the sequence of the SL PRS transmitted on the symbols 3-5 is 0000, 1111, 1100 respectively. Thus, the sequence of the SL PRS transmitted on the symbols 0-2 are 0000, 1111, 1100 respectively.

(5) The first-part resource includes C symbols, C being a positive integer. A sequence of the SL PRS transmitted on a $(C-k)^{th}$ symbol in the first-part resource is the same as a sequence of the SL PRS transmitted on a $(k+1)^{th}$ last symbol in the second-part resource, wherein k is an integer less than C; and an RE occupied on an RB by the SL PRS transmitted on the $(C-k)^{th}$ symbol in the first-part resource e is the same as an RE occupied on the RB by the SL PRS transmitted on the $(k+1)^{th}$ last symbol in the second-part resource.

In some embodiments, the first-part resource includes OFDM symbols 0-(C-1) in the first slot, and the OFDM symbol of the second-part resource starts from the $C^{th}$ symbol in the first slot. The sequence of the SL PRS transmitted by the UE on the OFDM symbols 0,1,..., C-1 where the PSCCH is located is the sequence of the SL PRS transmitted on C last OFDM symbols, and the occupied REs are the same as the C OFDM symbols.

For example, the symbols for transmitting the PSCCH are symbols 0-2, and the sequences of the SL PRSs transmitted on the symbols 11-13 are 0000, 1111, 1100 respectively. Thus, the sequences of the SL PRSs transmitted on the symbols 0-2 are 0000, 1111, 1100 respectively.

In the method, for any OFDM symbol for the SL PRS in the slot, that is, for the OFDM symbols from the OFDM symbol C to the last OFDM symbol for the SL PRS with the slot, the RE offset occupied by the SL PRS is determined based on an interval between the OFDM symbol and the OFDM symbol C.

**Method 2, the terminal transmits the PSCCH and the PSSCH in the slot transmitting the SL PRS, the PSCCH carries the first-order SCI, and the PSSCH carries the second-order** SCI.

Referring to FIG. 30, S213 includes S215.

**In S215,** in a case where network configuration or the pre-configuration indicates that resource reservation is allowed in an SL PRS resource pool, the SL PRS, a PSCCH, and a PSSCH are transmitted in a first slot, wherein the PSCCH carries first-order SCI, the PSSCH carries second-order SCI, and the SCI is used to indicate a reserved resource of the SL PRS.

In some embodiments, the SL PRS resource pool and the SL-U communication resource pool are in the slots where the reserved resource is located.

The UE that transmits the SL PRS transmits the PSCCH in the slot in which the SL PRS is transmitted, and the PSSCH is simultaneously transmitted in the slot. The PSCCH carries the second-order SCI to indicate transmission of the SL PRS.

In the embodiments, the SCI includes the first-order SCI and the second-order SCI. That is, the SCI-P includes the first-order SCI-P and the second-order SCI-P, the first-order SCI-P is carried by the PSCCH, and the second-order SCI-P is carried by the PSSCH. The first-order SCI-P and the second-order SCI-P carry different pieces of information. For example, the first-order SCI-P is used to carry the time-frequency resource information of SL PRS, and the second-order SCI-P is used to carry the sequence ID of the SL PRS, and the like.

In the embodiments, in the DMRS pattern of the PSSCH, the first OFDM symbol for transmitting the PSCCH includes the DMRS. The DMRS pattern of the PSSCH selected by the UE should ensure that the first OFDM symbol for transmitting the PSCCH includes the DMRS.

Specifically, the time-frequency resource for transmitting the PSCCH and the PSSCH includes the following cases.

**Method 2.1,** the SL PRS is not transmitted on a symbol where the PSCCH is located, the PSCCH is transmitted in a first subchannel used to transmit the SL PRS, and the PSSCH is transmitted in remaining IRBs on the symbol where the PSCCH is located.

The time-frequency resource of the PSCCH includes part or all of IRBs/RBs in a first subchannel for transmitting the SL PRS on an OFDM symbol for transmitting the PSCCH in the first slot.

The time-frequency resource of the SL PRS includes part or all of IRBs/RBs in a subchannel for transmitting the SL PRS on OFDM symbols other than the OFDM symbol for the PSCCH in the first slot.

The time-frequency resource of the PSCCH includes part or all of IRBs/RBs not for transmitting the PSCCH on the OFDM symbol for transmitting the PSCCH.

That is, the SL PRS is not transmitted on the OFDM symbol where the PSCCH is located, the UE occupies one or all IRBs in the first subchannel used to transmit the SL PRS on the OFDM symbol for transmitting the PSCCH in the slot to transmit the PSCCH, and the PSSCH is transmitted in remaining IRBs.

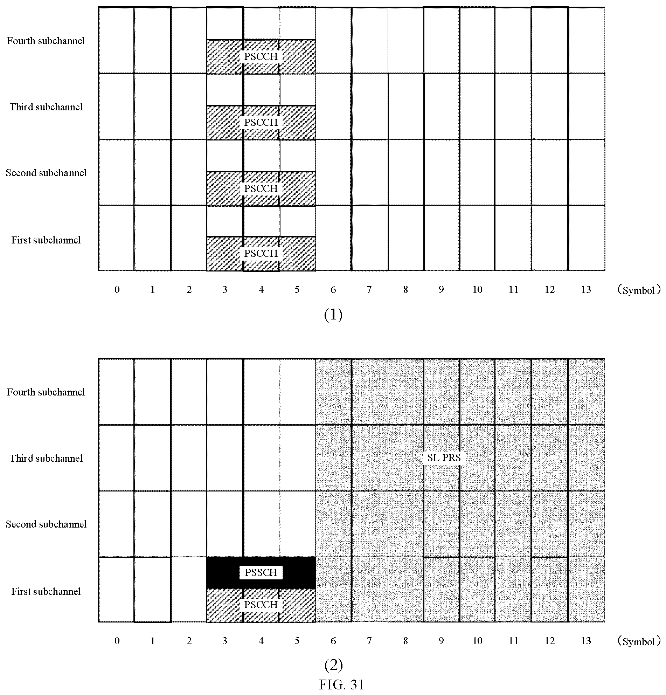

For example, as shown in FIG. 31(1), FIG. 31(1) is a diagram of a time-frequency resource for transmitting the SL PRS in the first slot. The first slot includes 14 symbols, and the frequency-domain resource for transmitting the SL PRS includes four subchannels. The symbol 3, the symbol 4, and the symbol 5 are OFDM symbols for transmitting the PSCCH. Based on the diagram of a time-frequency resource shown in FIG. 31(1) and as shown in FIG. 31(2), the time-frequency resource for transmitting the PSCCH in the method 2.1 are part or all IRBs/RBs in the first subchannels on the symbol 3, the symbol 4, and the symbol 5, the time-frequency resource for transmitting the PSSCH in the method are part or all IRBs/RBs not for transmitting the PSCCH in the first subchannels on the symbol 3, the symbol 4, and the symbol 5, and the time-frequency resource for transmitting the SL PRS are part or all IRBs/RBs in the four subchannels on the symbols 6-13.

In some embodiments, in a case where the SL PRS is transmitted in the first slot, the frequency-domain resource for transmitting the SL PRS includes part or all PRBs in the SL PRS resource pool. That is, in a case where the UE transmits the SL PRS in a slot, the UE occupies all or part PRBs in the resource pool.

The DMRS pattern of the PSSCH selected by the UE should ensure that the first OFDM symbol for the PSCCH includes the DMRS.

**Method 2.2,** the SL PRS is not transmitted on a symbol where the PSCCH is located, a plurality of groups of resources for transmitting the PSCCH, the PSSCH, and the SL PRS are in a slot, and different PSCCH/PSSCH resources correspond to different resources of the SL PRS.

A plurality of groups of time-frequency resources of the PSCCH are included in the first slot, and a group of time-frequency resources of the PSCCH includes part or all of IRBs on an OFDM symbol for transmitting the PSCCH. A plurality of groups of time-frequency resources of the PSCCH are included in the first slot, and a group of time-frequency resources of the PSSCH includes part or all of IRBs on an OFDM symbol for transmitting the PSSCH. A time-frequency resource of the SL PRS is in an interlaced structure, and a plurality of time-frequency resources of the SL PRS are included in the first slot. A time-frequency resource of the SL PRS includes a group of interlaced resources on OFDM symbols other than the OFDM symbol for transmitting the PSCCH and the OFDM symbol for transmitting the PSSCH in the first slot. The plurality of groups of time-frequency resources of the PSCCH, the plurality of groups of time-frequency resources of the PSSCH, and the plurality of time-frequency resources of the SL PRS are in one-to-one correspondence with each other.

In the method, the plurality of resources of the SL PRS are included in the frequency-domain range, and different resources of the SL PRS correspond to different resources of the PSCCH/PSSCH. For example, the SL PRS is in an interlaced structure, and different RE offsets on the first OFDM symbol for transmitting the SL PRS in the slot correspond to different resources of the SL PRS.

The plurality of time-frequency resources of the SL PRS are ranked based on the RE offset of the interlaced structure. In a case where the SL PRS is transmitted using an $i^{th}$ time-frequency resource of the SL PRS, the time-frequency resource for transmitting the PSCCH is part or all IRBs for transmitting the PSCCH transmission in an $i^{th}$ subchannel in the SL PRS resource pool, and i is an integer; and in a case where the SL PRS is transmitted using the $i^{th}$ time-frequency resource of the SL PRS, the time-frequency resource for transmitting the PSSCH is part or all IRBs not for transmitting the PSCCH transmission in the $i^{th}$ subchannel in the SL PRS resource pool, and i is an integer.

In the method, the resources of the PSCCH/PSSCH are one or more consecutive subchannels; part or all IRBs in the first subchannel in the subchannels are used to transmit the PSCCH, and remaining IRBs are used to transmit the PSSCH. In a case where the UE occupies the $i^{th}$ resource of the SL PRS, the UE transmits the PSCCH/PSSCH in the $i^{th}$ resource of the PSCCH/PSSCH occupied by the SL PRS.

That is, the time-frequency resource for transmitting the SL PRS is resources from the $i^{th}$ subchannel to the last subchannel occupied by the SL PRS on the OFDM symbol after the OFDM symbol for transmitting the PSCCH in the first slot.

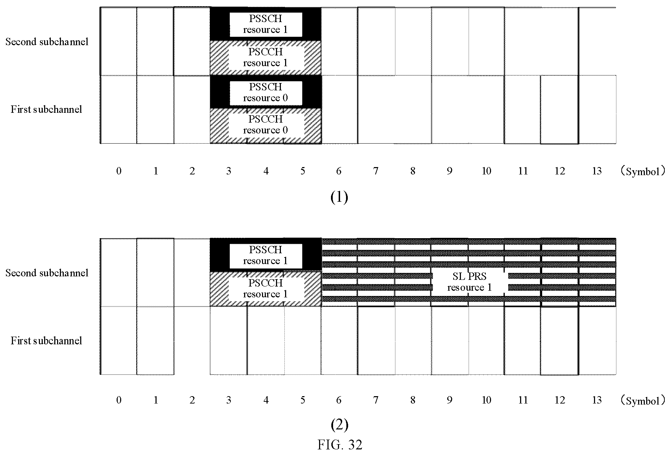

For example, as shown in FIG. 32(1), FIG. 32(1) is a diagram of a time-frequency resource for transmitting the SL PRS in the first slot. The first slot includes 14 symbols, and the frequency-domain resource for transmitting the SL PRS includes two subchannels, a subchannel includes 10 RBs, and an RB includes 12 REs. The SL PRS is in an interlaced structure, a size of the interlace is 2, the RE offset 0 corresponds to the SL PRS resource 0, and the RE offset 1 corresponds to the SL PRS resource 1. The symbol 3, the symbol 4, and the symbol 5 are OFDM symbols for transmitting the PSCCH. The resource for transmitting the PSCCH in the first subchannel is the PSCCH resource 0, and the resource for transmitting the PSCCH in the second subchannel is the PSCCH resource 1. The resource for transmitting the PSSCH in the first subchannel is the PSSCH resource 0, and the resource for transmitting the PSSCH in the second subchannel is the PSSCH resource 1. Based on the diagram of the time-frequency resource shown in FIG. 32(1), the SL PRS resource 0 corresponds to the PSCCH resource 0 and the PSSCH resource 0, and the SL PRS resource 1 corresponds to the PSCCH resource 1 and the PSSCH resource 1. As shown in in FIG. 32(2), in a case where the SL PRS is transmitted using the SL PRS resource 1 in the method 2.2, the time-frequency resource for transmitting the PSCCH is the PSCCH resource 1 in the second subchannel on the symbol 3, the symbol 4, and the symbol 5, and the time-frequency resource for transmitting the SL PRS is on the symbols 6-13, the time-frequency resource for transmitting the PSSCH is the PSSCH resource 1 in the second subchannel on the symbol 3, the symbol 4, and the symbol 5, the time-frequency resource for transmitting the SL PRS is on the symbols 6-13, and the RE offset being 1 corresponds to the SL PRS resource 1 in the second subchannel.

In the method, a plurality of UEs transmit the SL PRS in the same slot through a frequency division multiplexing mode.

**Method 2.3,** the SL PRS is transmitted on a symbol where the PSCCH is located.

The time-frequency resource of the PSCCH includes part or all of IRBs/RBs in a first subchannel for transmitting the SL PRS on an OFDM symbol for transmitting the PSCCH in the first slot. The time-frequency resource of the PSSCH includes part or all of IRBs/RBs not for transmitting the PSCCH on an OFDM symbol for transmitting the PSCCH and an OFDM symbol for transmitting the PSSCH in the first slot. The time-frequency resource of the SL PRS includes a first-part resource and a second-part resource. The first-part resource includes part or all of IRBs/RBs not for transmitting the PSCCH on the OFDM symbol for transmitting the PSCCH and the OFDM symbol for transmitting the PSSCH in the first slot, and the second-part resource includes part or all of IRBs/RBs in a subchannel for transmitting the SL PRS on OFDM symbols other than the OFDM symbol for transmitting the PSCCH and the OFDM symbol for transmitting the PSSCH in the first slot.

In some embodiments, the second-part resource includes part or all of IRBs/RBs in the subchannel for transmitting the SL PRS on OFDM symbols after the OFDM symbol for transmitting the PSCCH in the first slot.

Illustratively, the terminal transmits the SL PRS on the OFDM symbol where the PSCCH is located, and the receiver UE does not need to process the SL PRS transmitted on the OFDM symbol. In a case where a terminal capability of the receiver UE is great, the receiver UE processes the SL PRS transmitted on the OFDM symbol. In a case where a terminal capability of the receiver UE is less, the receiver UE does not process the SL PRS transmitted on the OFDM symbol.

In some embodiments, in determining the RE offsets of the SL PRS on different OFDM symbols, the OFDM symbols for transmitting the PSCCH are not considered. That is, the RE offset of the interlaced structure of the SL PRS is calculated based on the RE offset on the OFDM symbol in the second-part resource, and the RE offset on the OFDM symbol in the first-part resource is not considered.

In the method, the PSCCH carrying the first-order SCI-P and the PSSCH carrying the second-order SCI-P are transmitted in one or more subchannels from the subchannel occupied by the SL PRS. The UE transmits the SL PRS in IRBs other than the IRB for transmitting the PSCCH/PSSCH in the OFDM symbol of the PSCCH/PSSCH.

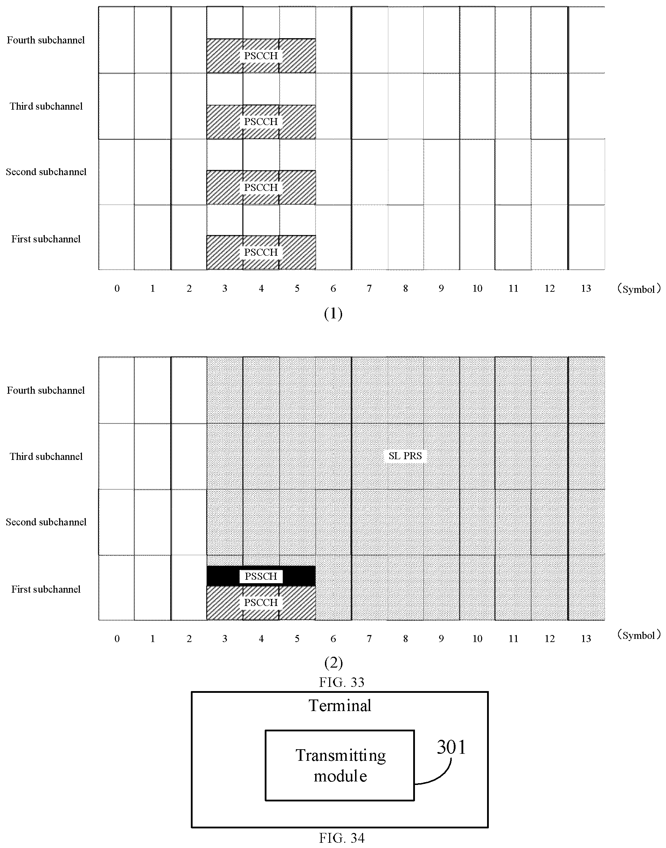

For example, as shown in FIG. 33(1), FIG. 33(1) is a diagram of a time-frequency resource for transmitting the SL PRS in the first slot. The first slot includes 14 symbols, and the frequency-domain resource for transmitting the SL PRS includes four subchannels. The symbol 3, the symbol 4, and the symbol 5 are OFDM symbols for transmitting the PSCCH. Based on the diagram of the time-frequency resource shown in FIG. 33(1) and as shown in FIG. 33(2), the time-frequency resource for transmitting the PSCCH in the method 2.3 are part or all IRBs/RBs in the first subchannels on symbol 3, symbol 4, and the symbol 5, the time-frequency resource for transmitting the PSSCH in the method 2.3 are part or all IRBs/RBs not for transmitting the PSCCH in the first subchannels on symbol 3, symbol 4, and symbol 5, and the time-frequency resource for transmitting the SL PRS are part or all IRBs/RBs not for transmitting the PSCCH in the four subchannels on symbols 3-13.

Illustratively, for the method for determining the sequence of the SL PRS transmitted on the first-part resource and the position of the RE for transmitting the SL PRS, reference may be made to description in the method 1.3.

In summary, in the method according to the embodiments, in a case where the terminal that transmits the SL PRS reserves the resource in the overlapping slot to transmit the SL PRS, the terminal needs to transmit the SCI-P identifiable by the backward UE. That is, the structures of the SCI-P and the SCI-C are the same as the transmission modes of the SCI-P and the SCI-C. Thus, the backward UE knows the reserved resource for the SL PRS, such that collisions between the transmission resource of the SL PRS and the communication resource of the SL-U are avoided, the interference between SL PRS data and SL-U data is mitigated, and the positioning accuracy of the SL PRS system is improved.

It should be noted that the processes in the method in above embodiments may be arbitrarily combined to obtain new embodiments, which are not limited in the present disclosure.

FIG. 34 is a structural block diagram of an apparatus for transmitting SCI according to some embodiments of the present disclosure. The apparatus is practiced as a terminal or part of a terminal. The apparatus includes:
a transmitting module 301, configured to transmit an SL PRS and SCI based on network configuration or pre-configuration, wherein the SCI is used to indicate resource reservation for the SL PRS.

In some embodiments, in a case where the network configuration or the pre-configuration indicates that resource reservation is not allowed in an SL PRS resource pool, the SCI is not used to indicate a reserved resource for the SL PRS.

In some embodiments, in a case where the network configuration or the pre-configuration does not indicate a reservable slot, the SCI is not used to indicate a reserved resource for the SL PRS.

In some embodiments, in a case where the network configuration or the pre-configuration indicates a reservable slot, the SCI is used to indicate a reserved resource for the SL PRS, wherein the reserved resource is a transmission resource in the reservable slot.

In some embodiments, the SCI is SCI-P, wherein a format of the SCI-P is different from a format of SCI-C, and/or, a transmission mode of the SCI-P is different from a transmission mode of SCI-C.

In some embodiments, in a case where the network configuration or the pre-configuration indicates that resource reservation is allowed in an SL PRS resource pool, the SCI is used to indicate a reserved resource for the SL PRS.

In some embodiments, in a case where a PSCCH in the SL PRS resource pool is transmitted over consecutive RBs, a PSCCH carrying the SCI is transmitted over consecutive RBs.

In some embodiments, in a case where a PSCCH in the SL PRS resource pool is transmitted using an IRB structure, a PSCCH carrying the SCI is transmitted using an IRB structure.

In some embodiments, the transmitting module 301 is configured to transmit the SL PRS and the SCI in a first slot, wherein the PSCCH carries the SCI.

In some embodiments, a time-frequency resource of the PSCCH includes part or all of IRBs in a first subchannel for transmitting the SL PRS on an OFDM symbol for transmitting the PSCCH in the first slot.

In some embodiments, in a case where the SL PRS is transmitted in the first slot, a frequency-domain resource for transmitting the SL PRS includes part or all of PRBs in the SL PRS resource pool.

In some embodiments, a plurality of groups of time-frequency resources of the PSCCH are included in the first slot, wherein one of the plurality of groups of time-frequency resources of the PSCCH includes part or all of IRBs on an OFDM symbol for transmitting the PSCCH; a time-frequency resource of the SL PRS is in an interlaced structure, and one or a plurality of time-frequency resources of the SL PRS are included in the first slot, wherein one of the one or the plurality of time-frequency resources of the SL PRS includes a group of interlaced resources on part or all of OFDM symbols other than the OFDM symbol for transmitting the PSCCH in the first slot; and the plurality of groups of time-frequency resources of the PSCCH are in one-to-one correspondence with the plurality of time-frequency resources of the SL PRS.

In some embodiments, the plurality of time-frequency resources of the SL PRS are arranged based on a RE offset of the interlaced structure; and in a case where the SL PRS is transmitted by an $i^{th}$ time-frequency resource of the SL PRS, a time-frequency resource for transmitting the PSCCH is part or all of IRBs for transmitting the PSCCH in an $i^{th}$ subchannel in the SL PRS resource pool, wherein i is an integer.

In some embodiments, a time-frequency resource of the PSCCH includes part or all of IRBs in a first subchannel for transmitting the SL PRS on an OFDM symbol for transmitting the PSCCH in the first slot; and a time-frequency resource of the SL PRS includes a first-part resource and a second-part resource, wherein the first-part resource includes part or all of IRBs not for transmitting the PSCCH on the OFDM symbol for transmitting the PSCCH in the first slot, and the second-part resource includes part or all of IRBs in a subchannel for transmitting the SL PRS on OFDM symbols other than the OFDM symbol for transmitting the PSCCH in the first slot.

In some embodiments, a sequence of the SL PRS transmitted on the first-part resource is the same as a sequence of a DMRS of the PSCCH, and a position of an RE occupied on an RB by the SL PRS transmitted on the first-part resource coincides with a position of an RE occupied on the RB by the DMRS of the PSCCH.

In some embodiments, a sequence of the SL PRS transmitted on the first-part resource is a subsequent part of a sequence of a DMRS of the PSCCH, and a position of an RE occupied on an RB by the SL PRS transmitted on the first-part resource coincides with a position of an RE occupied on the RB by the DMRS of the PSCCH.

In some embodiments, a sequence of the SL PRS transmitted on the first-part resource is the same as a sequence of the SL PRS transmitted on a first symbol of the second-part resource, and a position of an RE occupied on an RB by the SL PRS transmitted on the first-part resource coincides with a position of an RE occupied on the RB by the SL PRS transmitted on the first symbol of the second-part resource.

In some embodiments, a sequence of the SL PRS transmitted on a $j^{th}$ symbol of the first-part resource is the same as a sequence of the SL PRS transmitted on a $j^{th}$ symbol of the second-part resource, j being an integer, and a position of an RE occupied on an RB by the SL PRS transmitted on the $j^{th}$ symbol of the first-part resource coincides with a position of an RE occupied on the RB by the SL PRS transmitted on the $j^{th}$ symbol of the second-part resource.

In some embodiments, the first-part resource includes C symbols, C being a positive integer, wherein a sequence of the SL PRS transmitted on a $(C-k)^{th}$ symbol in the first-part resource is the same as a sequence of the SL PRS transmitted on a $(k+1)^{th}$ last symbol in the second-part resource, wherein k is an integer less than C; and an RE occupied on an RB by the SL PRS transmitted on the $(C-k)^{th}$ symbol in the first-part resource e is the same as an RE occupied on the RB by the SL PRS transmitted on the $(k+1)^{th}$ last symbol in the second-part resource.

In some embodiments, the SCI includes first-order SCI and second-order SCI, and the transmitting module 301 is configured to transmit the SL PRS, a PSCCH, and a PSSCH in a first slot, wherein the PSCCH carries the first-order SCI, and the PSSCH includes the second-order SCI.

In some embodiments, in a demodulation reference signal (DMRS) pattern of the PSSCH, a first OFDM symbol for transmitting the PSCCH includes a DERS.

In some embodiments, a time-frequency resource of the PSCCH includes part or all of IRBs in a first subchannel for transmitting the SL PRS on an OFDM symbol for transmitting the PSCCH in the first slot; a time-frequency resource of the SL PRS includes part or all of IRBs in a subchannel for transmitting the SL PRS on OFDM symbols other than the OFDM symbol for transmitting the PSCCH in the first slot; and a time-frequency resource of the PSSCH includes part or all of IRBs not for transmitting the PSCCH on the OFDM symbol for transmitting the PSCCH in the first slot.

In some embodiments, in a case where the SL PRS is transmitted in the first slot, a frequency-domain resource for transmitting the SL PRS includes part or all of PRBs in the SL PRS resource pool.

In some embodiments, a plurality of groups of time-frequency resources of the PSCCH are included in the first slot, wherein one of the plurality of groups of time-frequency resources of the PSCCH includes part or all of IRBs on an OFDM symbol for transmitting the PSCCH; a plurality of groups of time-frequency resources of the PSCCH are included in the first slot, wherein one of the plurality of groups of time-frequency resources of the PSSCH includes part or all of IRBs on an OFDM symbol for transmitting the PSSCH; a time-frequency resource of the SL PRS is in an interlaced structure, and a plurality of time-frequency resources of the SL PRS are included in the first slot, wherein one of the plurality of time-frequency resources of the SL PRS includes a group of interlaced resources on OFDM symbols other than the OFDM symbol for transmitting the PSCCH and the OFDM symbol for transmitting the PSSCH in the first slot; and the plurality of groups of time-frequency resources of the PSCCH, the plurality of groups of time-frequency resources of the PSSCH, and the plurality of time-frequency resources of the SL PRS are in one-to-one correspondence with each other.

In some embodiments, the plurality of time-frequency resources of the SL PRS are arranged based on an RE offset of the interlaced structure; in a case where the SL PRS is transmitted by an $i^{th}$ time-frequency resource of the SL PRS, a time-frequency resource for transmitting the PSCCH is part or all of IRBs for transmitting the PSCCH in an $i^{th}$ subchannel in the SL PRS resource pool, wherein i is an integer; and in the case where the SL PRS is transmitted by the $i^{th}$ time-frequency resource of the SL PRS, a time-frequency resource for transmitting the PSSCH is part or all of IRBs for transmitting the PSSCH in the $i^{th}$ subchannel in the SL PRS resource pool, wherein i is an integer.

In some embodiments, a time-frequency resource of the PSCCH includes part or all of IRBs in one or more subchannels for transmitting the SL PRS on an OFDM symbol for transmitting the PSCCH in the first slot; a time-frequency resource of the PSSCH includes part or all of IRBs not for transmitting the PSCCH on the symbol for transmitting the PSCCH and an OFDM symbol for transmitting the PSSCH in the first slot; and a time-frequency resource of the SL PRS includes a first-part resource and a second-part resource, wherein the first-part resource includes part or all of IRBs not for transmitting the PSCCH or the PSSCH on the OFDM symbol for transmitting the PSCCH and the OFDM symbol for transmitting the PSSCH in the first slot, and the second-part resource includes part or all of IRBs in a subchannel for transmitting the SL PRS on OFDM symbols other than the OFDM symbol for transmitting the PSCCH and the OFDM symbol for transmitting the PSSCH in the first slot.

In some embodiments, the SCI is SCI-P, wherein a format of the SCI-P is the same as a format of SCI-C, and a transmission mode of the SCI-P is the same as a transmission mode of SCI-C.

In some embodiments, the SCI-P includes at least one of: identification information of the SL PRS, a time-frequency resource position occupied by the SL PRS, a number of repetitions of the SL PRS and a time-frequency resource position for repetition transmission, a transmission period of the SL PRS, and information related to a transmitter terminal of the SL PRS.

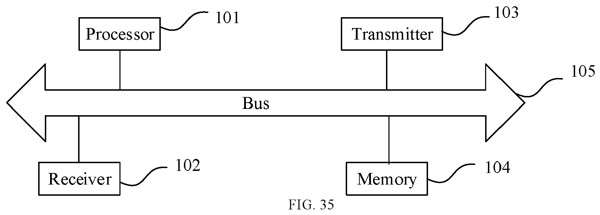

FIG. 35 is a schematic structural diagram of a communication device (a terminal or a network device) according to some embodiments of the present disclosure. The communication device includes: a processor 101, a receiver 102, a transmitter 103, a memory 104, and a bus 105.

The processor 101 includes one or more processing cores, and achieves various functional applications and information processing by running software programs and modules.

The receiver 102 and the transmitter 103 are practiced as a communication assembly. The communication assembly is a communication chip, and is also referred to as a transceiver.

The memory 104 is connected to the processor 101 over the bus 105.

The memory 104 is configured to store one or more instructions, and the processor 101 is configured to load and execute the one or more instructions to perform various processes in the above method embodiments.

In addition, the memory 104 is practiced by any type of volatile or non-volatile storage device or combinations thereof. The volatile or non-volatile storage device includes but is not limited to a disk or optical disc, an electrically erasable programmable read only memory (EEPROM), an erasable programmable read-only memory (EPROM), a static random-access memory (SRAM), a read-only memory (ROM), a magnetic memory, a flash memory, or a programmable read-only memory (PROM).

In a case where the communication device is practices as a terminal, the processor and the transceiver in the communication device in the embodiments of the present disclosure perform the processes applicable to the terminal in any above method, which is not repeated again.

In some embodiments, in a case where the communication device is practices as a terminal, the transceiver is configured to an SL PRS and SCI based on overlapped resources between the SL PRA resource pool and the SL-U communication resource pool and network configuration or pre-configuration, wherein the SCI is used to indicate resource reservation for the SL PRS.

Some embodiments of the present disclosure further provide a computer-readable storage medium storing one or more instructions, one or more programs, a code set, or an instruction set, which when loaded and run by a processor, cause the processor to perform the method for transmitting SCI applicable to the communication device in the above method embodiments.

Some embodiments of the present disclosure further provide a chip. The chip includes programmable logic circuity and/or program instructions, wherein the chip, when running on a communication device, is caused the communication device to perform the method for transmitting SCI in the above method embodiments.

Some embodiments of the present disclosure further provide a computer program product. The computer program product, when running on a processor in a communication device, cause the communication device to perform the method for transmitting SCI in the above method embodiments.

It should be understood by those skilled in the art that all or prat processes in the embodiments are practiced by the hardware or related hardware instructed by programs. The programs are stored in a computer-readable storage medium. The storage medium is an ROM, a disk or CD, and the like.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

**Claims**

1. A method for transmitting sidelink control information (SCI), applicable to a terminal, the method comprising:
   transmitting a sidelink (SL) positioning reference signal (PRS) and SCI based on network configuration or pre-configuration, wherein the SCI is used to indicate resource reservation for the SL PRS.

2. The method according to claim 1, wherein in a case where the network configuration or the pre-configuration indicates that resource reservation is not allowed in an SL PRS resource pool, the SCI is not used to indicate a reserved resource for the SL PRS.

3. The method according to claim 1, wherein in a case where the network configuration or the pre-configuration does not indicate a reservable slot, the SCI is not used to indicate a reserved resource for the SL PRS.

4. The method according to claim 1, wherein in a case where the network configuration or the pre-configuration indicates a reservable slot, the SCI is used to indicate a reserved resource for the SL PRS, wherein the reserved resource is a transmission resource in the reservable slot.

5. The method according to any one of claims 1 to 4, wherein the SCI is SCI for positioning (SCI-P), wherein a format of the SCI-P is different from a format of SCI for communication (SCI-C), and/or, a transmission mode of the SCI-P is different from a transmission mode of SCI-C.

6. The method according to claim 1, wherein in a case where the network configuration or the pre-configuration indicates that resource reservation is allowed in an SL PRS resource pool, the SCI is used to indicate a reserved resource for the SL PRS.

7. The method according to claim 6, wherein in a case where a physical sidelink control channel (PSCCH) in the SL PRS resource pool is transmitted over consecutive resource blocks (RBs), a PSCCH carrying the SCI is transmitted over consecutive RBs.

8. The method according to claim 6, wherein in a case where a physical sidelink control channel (PSCCH) in the SL PRS resource pool is transmitted using an interlaced resource block (IRB) structure, a PSCCH carrying the SCI is transmitted using an IRB structure.

9. The method according to claim 7 or 8, wherein transmitting the SL PRS and the SCI comprises:
transmitting the SL PRS and the SCI in a first slot, wherein the PSCCH carries the SCI.

10. The method according to claim 9, wherein a time-frequency resource of the PSCCH comprises part or all of IRBs in a first subchannel for transmitting the SL PRS on an orthogonal frequency division multiplexing (OFDM) symbol for transmitting the PSCCH in the first slot.

11. The method according to claim 10, wherein in a case where the SL PRS is transmitted in the first slot, a frequency-domain resource for transmitting the SL PRS comprises part or all of physical resource blocks (PRBs) in the SL PRS resource pool.

12. The method according to claim 9, wherein

a plurality of groups of time-frequency resources of the PSCCH are included in the first slot, wherein one of the plurality of groups of time-frequency resources of the PSCCH comprises part or all of interlaced resource blocks (IRBs) on an orthogonal frequency division multiplexing (OFDM) symbol for transmitting the PSCCH;
a time-frequency resource of the SL PRS is in an interlaced structure, and one or a plurality of time-frequency resources of the SL PRS are included in the first slot, wherein one of the one or the plurality of time-frequency resources of the SL PRS comprises a group of interlaced resources on part or all of OFDM symbols other than the OFDM symbol for transmitting the PSCCH in the first slot; and
the plurality of groups of time-frequency resources of the PSCCH are in one-to-one correspondence with the plurality of time-frequency resources of the SL PRS.

13. The method according to claim 12, wherein

the plurality of time-frequency resources of the SL PRS are arranged based on a resource element (RE) offset of the interlaced structure; and
in a case where the SL PRS is transmitted by an $i^{th}$ time-frequency resource of the SL PRS, a time-frequency resource for transmitting the PSCCH is part or all of IRBs for transmitting the PSCCH in an $i^{th}$ subchannel in the SL PRS resource pool, wherein i is an integer.

14. The method according to claim 9, wherein

a time-frequency resource of the PSCCH comprises part or all of IRBs in a first subchannel for transmitting the SL PRS on an orthogonal frequency division multiplexing (OFDM) symbol for transmitting the PSCCH in the first slot; and

a time-frequency resource of the SL PRS comprises a first-part resource and a second-part resource, wherein the first-part resource comprises part or all of IRBs not for transmitting the PSCCH on the OFDM symbol for transmitting the PSCCH in the first slot, and the second-part resource comprises part or all of IRBs in a subchannel for transmitting the SL PRS on OFDM symbols other than the OFDM symbol for transmitting the PSCCH in the first slot.

15. The method according to claim 14, wherein a sequence of the SL PRS transmitted on the first-part resource is the same as a sequence of a demodulation reference signal (DMRS) of the PSCCH, and a position of a resource element (RE) occupied on a resource block (RB) by the SL PRS transmitted on the first-part resource coincides with a position of an RE occupied on the RB by the DMRS of the PSCCH.

16. The method according to claim 14, wherein a sequence of the SL PRS transmitted on the first-part resource is a subsequent part of a sequence of a demodulation reference signal (DMRS) of the PSCCH, and a position of a resource element (RE) occupied on a resource block (RB) by the SL PRS transmitted on the first-part resource coincides with a position of an RE occupied on the RB by the DMRS of the PSCCH.

17. The method according to claim 14, wherein a sequence of the SL PRS transmitted on the first-part resource is the same as a sequence of the SL PRS transmitted on a first symbol of the second-part resource, and a position of a resource element (RE) occupied on a resource block (RB) by the SL PRS transmitted on the first-part resource coincides with a position of an RE occupied on the RB by the SL PRS transmitted on the first symbol of the second-part resource.

18. The method according to claim 14, wherein a sequence of the SL PRS transmitted on a $j^{th}$ symbol of the first-part resource is the same as a sequence of the SL PRS transmitted on a $j^{th}$ symbol of the second-part resource, j being an integer, and a position of a resource element (RE) occupied on a resource block (RB) by the SL PRS transmitted on the $j^{th}$ symbol of the first-part resource coincides with a position of an RE occupied on the RB by the SL PRS transmitted on the $j^{th}$ symbol of the second-part resource.

19. The method according to claim 14, wherein the first-part resource comprises C symbols, C being a positive integer, wherein

a sequence of the SL PRS transmitted on a $(C-k)^{th}$ symbol in the first-part resource is the same as a sequence of the SL PRS transmitted on a $(k+1)^{th}$ last symbol in the second-part resource, wherein k is an integer less than C; and

a resource element (RE) occupied on a resource block (RB) by the SL PRS transmitted on the $(C-k)^{th}$ symbol in the first-part resource is the same as an RE occupied on the RB by the SL PRS transmitted on the $(k+1)^{th}$ last symbol in the second-part resource.

20. The method according to any one of claims 6 to 8, wherein the SCI includes first-order SCI and second-order SCI, and transmitting the SL PRS and the SCI comprises:
transmitting the SL PRS, a physical sidelink control channel (PSCCH), and a physical sidelink share channel (PSSCH) in a first slot, wherein the PSCCH carries the first-order SCI, and the PSSCH comprises the second-order SCI.

21. The method according to claim 20, wherein in a demodulation reference signal (DMRS) pattern of the PSSCH, a first orthogonal frequency division multiplexing (OFDM) symbol for transmitting the PSCCH includes a DERS.

22. The method according to claim 20 or 21, wherein

a time-frequency resource of the PSCCH comprises part or all of IRBs in a first subchannel for transmitting the SL PRS on an orthogonal frequency division multiplexing (OFDM) symbol for transmitting the PSCCH in the first slot;

a time-frequency resource of the SL PRS comprises part or all of IRBs in a subchannel for transmitting the SL PRS on OFDM symbols other than the OFDM symbol for transmitting the PSCCH in the first slot; and
a time-frequency resource of the PSSCH comprises part or all of IRBs not for transmitting the PSCCH on the OFDM symbol for transmitting the PSCCH in the first slot.

23. The method according to claim 22, wherein in a case where the SL PRS is transmitted in the first slot, a frequency-domain resource for transmitting the SL PRS comprises part or all of physical resource blocks (PRBs) in the SL PRS resource pool.

24. The method according to claim 20 or 21, wherein

a plurality of groups of time-frequency resources of the PSCCH are in the first slot, wherein one of the plurality of groups of time-frequency resources of the PSCCH comprises part or all of interlaced resource blocks (IRBs) on an orthogonal frequency division multiplexing (OFDM) symbol for transmitting the PSCCH;
a plurality of groups of time-frequency resources of the PSCCH are in the first slot, wherein one of the plurality of groups of time-frequency resources of the PSSCH comprises part or all of IRBs on an OFDM symbol for transmitting the PSSCH;
a time-frequency resource of the SL PRS is in an interlaced structure, and a plurality of time-frequency resources of the SL PRS are in the first slot, wherein one of the plurality of time-frequency resources of the SL PRS comprises a group of interlaced resources on OFDM symbols other than the OFDM symbol for transmitting the PSCCH and the OFDM symbol for transmitting the PSSCH in the first slot; and
the plurality of groups of time-frequency resources of the PSCCH, the plurality of groups of time-frequency resources of the PSSCH, and the plurality of time-frequency resources of the SL PRS are in one-to-one correspondence with each other.

25. The method according to claim 24, wherein

the plurality of time-frequency resources of the SL PRS are arranged based on a resource element (RE) offset of the interlaced structure;
in a case where the SL PRS is transmitted by an $i^{th}$ time-frequency resource of the SL PRS, a time-frequency resource for transmitting the PSCCH is part or all of IRBs for transmitting the PSCCH in an $i^{th}$ subchannel in the SL PRS resource pool, wherein i is an integer; and
in the case where the SL PRS is transmitted by the $i^{th}$ time-frequency resource of the SL PRS, a time-frequency resource for transmitting the PSSCH is part or all of IRBs for transmitting the PSSCH in the $i^{th}$ subchannel in the SL PRS resource pool, wherein i is an integer.

26. The method according to claim 20 or 21, wherein

a time-frequency resource of the PSCCH comprises part or all of IRBs in one or more subchannels for transmitting the SL PRS on an orthogonal frequency division multiplexing (OFDM) symbol for transmitting the PSCCH in the first slot;
a time-frequency resource of the PSSCH comprises part or all of IRBs not for transmitting the PSCCH on the symbol for transmitting the PSCCH and an OFDM symbol for transmitting the PSSCH in the first slot; and
a time-frequency resource of the SL PRS comprises a first-part resource and a second-part resource, wherein the first-part resource comprises part or all of IRBs not for transmitting the PSCCH or the PSSCH on the OFDM symbol for transmitting the PSCCH and the OFDM symbol for transmitting the PSSCH in the first slot, and the second-part resource comprises part or all of IRBs in a subchannel for transmitting the SL PRS on OFDM symbols other than the OFDM symbol for transmitting the PSCCH and the OFDM symbol for transmitting the PSSCH in the first slot.

27. The method according to any one of claims 6 to 26, wherein the SCI is SCI for positioning (SCI-P), wherein a format of the SCI-P is the same as a format of SCI for communication (SCI-C), and a transmission mode of the SCI-P is the same as a transmission mode of SCI-C.

28. The method according to claim 5 or 27, wherein the SCI-P comprises at least one of: identification information of the SL PRS, a time-frequency resource position occupied by the SL PRS, a number of repetitions of the SL PRS and a time-frequency resource position for repetition transmission, a transmission period of the SL PRS, and information related to a transmitter terminal of the SL PRS.

29. An apparatus for transmitting sidelink control information (SCI), applicable to implementing a terminal, the apparatus comprising:
a transmitting module, configured to transmit a sidelink (SL) positioning reference signal (PRS) and SCI based on network configuration or pre-configuration, wherein the SCI is used to indicate resource reservation for the SL PRS.

30. A terminal, comprising: a processor and a transceiver communicably connected to the processor, wherein the transceiver is configured to transmit a sidelink (SL) positioning reference signal (PRS) and SCI based on network configuration or pre-configuration, wherein the SCI is used to indicate resource reservation for the SL PRS.

31. A terminal, comprising: a processor and a memory storing one or more instructions, one or more programs, a code set, and an instruction set, which when loaded and executed by the processor, cause the terminal to perform the method for transmitting sidelink control information (SCI) as defined in any one of claims 1 to 28.

32. A computer-readable storage medium, storing one or more executable instructions, which when loaded and executed by a processor, wherein the one or more computer programs, when loaded and run by a processor of a communication device, cause the communication device to perform the method for transmitting sidelink control information (SCI) as defined in any one of claims 1 to 28.

33. A chip, comprising: programmable logic circuity and/or one or more programs, wherein a communication device equipped with the chip is configured to perform the method for transmitting sidelink control information (SCI) as defined in any one of claims 1 to 28.

Network architecture 100

Core network

30

30

Access
network

20

20

Terminal

10

10

FIG. 1

STA 10

21

SL communication

21

FIG. 2

FIG. 3

FIG. 4

FIG. 5

AGC for receiving a
PSFCH

FIG. 6

0   1   2   3   4   5   6   7   8   9   10   11   12   13

FIG. 7

RE#0  RE#1  RE#2  RE#3  RE#4  RE#5  RE#6  RE#7  RE#8  RE#9  RE#10  RE#11

FIG. 8

PSCCH frequency-
domain resource
indication

Size of a
subchannel

PSCCH    PSSCH

PSCCH    PSSCH

PSCCH    PSSCH

Number of
subchannels
=3

$f$

$t$

Index of a start RB of a
subchannel

FIG. 9

|←————Slot 0————→|←————Slot 1————→|

☐ Downlink
symbol    ☐ Flexible slot    ■ Uplink symbol

FIG. 10

Start symbol
position=3

Number of
symbols=11

$f$

$t$

0  1  2  3  4  5  6  7  8  9  10  11  12  13

▨ PSCCH    ▩ PSSCH    ☐ GP    ▨ Symbols not used
for SL

FIG. 11

An SFN period, 10240 subframes

0 1 2 3 4 5 6 7 8 9 ...... 158 159 160 161 162 ...... 318 319 320 321 322 10238 10239

Remaining subframes

Bitmap(1110000000)

0 1 2 3 4 5 6 7 8 9 10 11 12 13 ...... 10108 10109

Subframes of a resource pool

0 1 2 3031 3032

First SFN period Second SFN period

FIG. 12

| 0 | 1 | 2 | 3 | 4 | 0 | 1 | 2 | 3 | 4 | 0 | 1 | 2 | 3 | 4 | 0 | 1 | 2 | 3 | 4 |

0 1 2 3 4 5 6 7 8 9 10 11 12 13 14 15 16 17 18 19

$f$(RB)

IRB 0        IRB 1

FIG. 13

FIG. 14

Legend: AGC, PSCCH1, PSSCH1, PSCCH2, PSSCH2, GP

60MHz carrier bandwidth

20 MHz | 20 MHz | 20 MHz

RB set#0 | GP | RB set#2 | GP | RB set#3

FIG. 15

210

Transmitting an SL PRS and SCI based on network configuration or pre-configuration, wherein the SCI is used to indicate resource reservation for the SL PRS

FIG. 16

FIG. 17

FIG. 18

FIG. 19

FIG. 20

| Transmitting an SL PRS and SCI in a case where the network configuration or the pre-configuration indicates that resource reservation is not allowed in a SL PRS resource pool, wherein the SCI is used to indicate resource reservation for the SL PRS | 211 |

FIG. 21

| Transmitting an SL PRS and SCI in a case where the network configuration or the pre-configuration indicates a reservable slot, wherein the SCI is used to indicate a reserved resource for the SL PRS, wherein the reserved resource is a transmission resource in the reservable slot | 212 |

FIG. 22

Resources in
an SL-U
communica-
tion resource
pool

PSCCH

Slots belonging
to an SL PRS
resource pool

Resources in
an SL-U
communica-
tion resource
pool

Slots belonging
to an SL PRS
resource pool

0    1    2    3    4    5    6    7    8    9    10    11    12    13    14    15    16    17    18    19

FIG. 23

Transmitting an SL PRS and SCI in a case where the network
configuration or the pre-configuration indicates that resource
reservation is allowed in an SL PRS resource pool, wherein the
SCI is used to indicate a reserved resource for the SL PRS

213

FIG. 24

In a case where network configuration or the pre-configuration
indicates that resource reservation is allowed in an SL PRS
resource pool, transmitting the SL PRS and a PSCCH in a first slot,
wherein the PSCCH carries SCI, and the SCI is used to indicate a
reserved resource for the SL PRS

214

FIG. 25

Fourth subchannel

Third subchannel

Second subchannel

First subchannel

|PSCCH|

0  1  2  3  4  5  6  7  8  9  10  11  12  13  (Symbol)

(1)

Fourth subchannel

Third subchannel

SL PRS

Second subchannel

First subchannel

|PSCCH|

0  1  2  3  4  5  6  7  8  9  10  11  12  13  (Symbol)

(2)

FIG. 26

SL PRS resource #0
(RE offset=0)

SL PRS resource #1
(RE offset=1)

FIG. 27

FIG. 28

EP 4 641 989 A1

Fourth subchannel

PSCCH

Third subchannel

PSCCH

Second subchannel

PSCCH

First subchannel

PSCCH

0 1 2 3 4 5 6 7 8 9 10 11 12 13 (Symbol)

(1)

Fourth subchannel

Third subchannel

SL PRS

Second subchannel

First subchannel

PSCCH

0 1 2 3 4 5 6 7 8 9 10 11 12 13 (Symbol)

(2)

FIG. 29

In a case where network configuration or the pre-configuration indicates that resource reservation is allowed in an SL PRS resource pool, transmitting the SL PRS, a PSCCH, and a PSSCH in a first slot, wherein the PSCCH carries first-order SCI, the PSSCH carries second-order SCI, and the SCI is used to indicate a reserved resource for the SL PRS

215

FIG. 30

Fourth subchannel

Third subchannel

Second subchannel

First subchannel

| | 0 | 1 | 2 | 3 | 4 | 5 | 6 | 7 | 8 | 9 | 10 | 11 | 12 | 13 | (Symbol) |

(1)

Fourth subchannel

Third subchannel

Second subchannel

First subchannel

SL PRS

PSSCH

PSCCH

| | 0 | 1 | 2 | 3 | 4 | 5 | 6 | 7 | 8 | 9 | 10 | 11 | 12 | 13 | (Symbol) |

(2)

FIG. 31

(1)

(2)

FIG. 32

Fourth subchannel

Third subchannel

Second subchannel

First subchannel

| | | | | PSCCH | | | | | | | | | | |

0  1  2  3  4  5  6  7  8  9  10  11  12  13  (Symbol)

(1)

Fourth subchannel

Third subchannel

SL PRS

Second subchannel

First subchannel

PSSCH

PSCCH

0  1  2  3  4  5  6  7  8  9  10  11  12  13  (Symbol)

(2)

FIG. 33

Terminal

Transmitting module  301

FIG. 34

| Processor | ~ 101 | | Transmitter | ~ 103 |

Bus ~ 105

| Receiver | ~ 102 | | Memory | ~ 104 |

FIG. 35

## INTERNATIONAL SEARCH REPORT

| International application No. |
| --- |
| **PCT/CN2022/141078** |

**A.    CLASSIFICATION OF SUBJECT MATTER**

H04L 27/00(2006.01)i

According to International Patent Classification (IPC) or to both national classification and IPC

**B.    FIELDS SEARCHED**

Minimum documentation searched (classification system followed by classification symbols)

IPC:  H04L

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; 3GPP: 侧行, 侧链, 控制信息, 控制信道, 定位参考信号, 预留, 保留, 资源, 指示, 配置, 非授权, 未授权, 冲突, 重叠, sidelink, SL, SCI, PSCCH, SL 1W PRS, sidelink 1W PRS, reserv+, resource?, indicat+, configur+

**C.    DOCUMENTS CONSIDERED TO BE RELEVANT**

| Category* | Citation of document, with indication, where appropriate, of the relevant passages | Relevant to claim No. |
| --- | --- | --- |
| X | HUAWEI et al. "Discussion on Solutions to Support SL Positioning" *3GPP TSG-RAN WG1 Meeting #109-e, R1-2203164*, 29 April 2022 (2022-04-29), section 5 | 1-33 |
| X | WO 2022191911 A1 (QUALCOMM INC.) 15 September 2022 (2022-09-15) description, paragraphs [0026], [0091] and [0109]-[0221] | 1-33 |
| A | CN 113055136 A (DATANG MOBILE COMMUNICATIONS EQUIPMENT CO., LTD.) 29 June 2021 (2021-06-29) entire document | 1-33 |
| A | WO 2022165835 A1 (LENOVO BEIJING LTD.) 11 August 2022 (2022-08-11) entire document | 1-33 |
| A | CN 115280860 A (QUALCOMM INC.) 01 November 2022 (2022-11-01) entire document | 1-33 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 July 2023** | **01 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/141078**

| Patent document cited in search report | | | Publication date (day/month/year) | Patent family member(s) | | | Publication date (day/month/year) |
|---|---|---|---|---|---|---|---|
| WO | 2022191911 | A1 | 15 September 2022 | TW | 202236895 | A | 16 September 2022 |
| CN | 113055136 | A | 29 June 2021 | CN | 113055136 | B | 30 August 2022 |
| WO | 2022165835 | A1 | 11 August 2022 | | None | | |
| CN | 115280860 | A | 01 November 2022 | WO | 2021188208 | A1 | 23 September 2021 |
| | | | | TW | 202137785 | A | 01 October 2021 |
| | | | | JP | 2023518708 | A | 08 May 2023 |
| | | | | US | 2021297206 | A1 | 23 September 2021 |
| | | | | US | 11601235 | B2 | 07 March 2023 |
| | | | | EP | 4122255 | A1 | 25 January 2023 |
| | | | | BR | 112022018215 | A2 | 25 October 2022 |
| | | | | KR | 20220155429 | A | 22 November 2022 |

Form PCT/ISA/210 (patent family annex) (July 2022)